# EUROPEAN PATENT SPECIFICATION

(11) **EP 3 789 951 B1**
(45) Date of publication and mention of the grant of the patent: **25.06.2025**
(21) Application number: 20784935.7
(22) Date of filing: 26.02.2020
(51) Int. Cl.: G06Q 10/02

(54) **HOTEL MANAGEMENT METHOD AND APPARATUS, AND BLOCKCHAIN NODE SERVER**
HOTELVERWALTUNGSVERFAHREN UND -VORRICHTUNG UND BLOCKCHAIN-KNOTENSERVER
PROCÉDÉ ET APPAREIL DE GESTION D'HÔTEL ET SERVEUR DE NOEUDS DE BLOCKCHAIN

(30) Priority: 29.03.2019 CN 201910256017
(43) Date of publication of application: 10.03.2021
(73) Proprietor: Launch Tech Co., Ltd, Longgang District Shenzhen Guangdong 518000 (CN)
(72) Inventor: LIU, Xin, Shenzhen, Guangdong 518000 (CN)
(74) Representative: Hamer, Christopher K.
(86) International application number: PCT/CN2020/076757
(87) International publication number: WO 2020/199796

(56) References cited:
- CN-A- 107 240 001
- CN-A- 108 229 926
- CN-A- 109 064 215
- CN-A- 109 086 628
- CN-A- 109 146 499
- CN-A- 109 447 811
- CN-A- 109 993 667
- CN-A- 110 851 496
- US-A1- 2019 050 806

## Description

### CROSS-REFERENCE TO RELATED APPLICATION(S)

This application claims priority to and the benefit of Chinese Application Serial No. 201910256017.6, entitled "METHOD AND APPARATUS FOR HOTEL MANAGEMENT AND BLOCKCHAIN NODE SERVER" and filed on March 29, 2019.

### TECHNICAL FIELD

This disclosure relates to the field of blockchain technology, and more particularly to a method and apparatus for hotel management and a blockchain node server.

### BACKGROUND

The ultimate goal of hotel management is to coordinate allocation of various internal and external resources of a hotel with high efficiency to provide the best service for guests. In order to provide the best service, the hotel needs to be equipped with sufficient staff in each department, and to ensure that the employees have a high comprehensive quality, because employees with insufficient comprehensive quality may treat work in a negative attitude and thus result in a significant decline in service quality of the hotel.

Currently, a management mode of domestic hotel industry is generally characterized by leadership decision making by hotel owners and execution by employees of various departments. Although a management system of a first-class hotel has been introduced to some hotels, it has not yet taken a significant effect on the service quality of the hotel because the service quality of the hotel depends mostly on execution ability of on-site staff.

Therefore, there is currently a need for an efficient hotel management method that can both reduce personnel costs and allocate efficiently resources of the hotel.

Document CN 109 146 499 A discloses executing a smart contract to adjust the credit score of the user's credit account according to the original block data.

Document CN109 447 811 A relates to a method step of querying the transaction information of the target service node.

### SUMMARY

Implementations provide a method for hotel management, which is possible to greatly improve efficiency in hotel management while reducing labor cost and operating cost of a hotel.

In a first aspect, a method for hotel management is provided. The method is applicable to a blockchain node server. The method includes the following. An order request of a customer for a hotel is received. Demand information in the order request is pushed to a professional, where the demand information is indicative of a demand of the customer. Receive order-taking information which indicates that the professional has taken the order. Transaction information is generated according to the order request and the order-taking information, where the transaction information includes a transaction amount, account information of the customer, account information of the professional, and account information of a hotelier. Verification information of the customer is verified when the customer checks in at the hotel, and the customer is allowed to check in after successful verification. The transaction information is uploaded to a blockchain when check-out information of the customer is received, such that the blockchain executes a predetermined smart contract to complete profit sharing, where the smart contract is indicative of a profit-sharing ratio between the professional and the hotelier.

In a second aspect, an apparatus for hotel management is provided. The apparatus is applicable to a blockchain node server. The apparatus includes units for performing the method described in the first aspect. The apparatus includes a receiving unit, a sending unit, a generating unit, a checking-in unit, and an executing unit. The receiving unit is configured to receive an order request of a customer for a hotel. The sending unit is configured to push demand information in the order request to a professional, where the demand information is indicative of a demand of the customer. The receiving unit is further configured to receive order-taking information which indicates that the professional has taken the order. The generating unit is configured to generate transaction information according to the order request and the order-taking information, where the transaction information includes a transaction amount, account information of the customer, account information of the professional, and account information of a hotelier. The checking-in unit is configured to verify verification information of the customer when the customer checks in at the hotel, and allow the customer to check in after successful verification. The executing unit is configured to upload the transaction information to a blockchain when the receiving unit receives check-out information of the customer, such that the blockchain executes a predetermined smart contract to complete profit sharing, where the smart contract is indicative of a profit-sharing ratio between the professional and the hotelier.

In a third aspect, a blockchain node server is provided. The blockchain node server includes a processor and a memory. The processor is coupled with the memory. The memory is configured to store computer programs, and the computer programs includes program instructions. The processor is configured to invoke the program instructions to perform the method described in the first aspect.

In a fourth aspect, a computer-readable storage medium is provided. The computer-readable storage medium is configured to store computer programs, and the computer programs include program instructions which, when executed by a processor, are operable with the processor to perform the method described in the first aspect.

According to implementations provided herein, when the order request of the customer for the hotel is received, the demand information in the order request is pushed to the professional. When the order-taking information which indicates that the professional has taken the order is received, the transaction information is generated according to the order request and the order-taking information. When the customer checks in at the hotel, identity verification is performed on the customer, and the customer is allowed to check in after successful verification. When the check-out information of the customer is received, the transaction information is uploaded to the blockchain to trigger execution of the smart contract in the blockchain, to deduct from an account of the customer an amount indicated by the transaction amount and transfer the deducted amount to an account of the professional and an account of the hotelier respectively according to the profit-sharing ratio between the professional and the hotelier. As can be seen, implementations provide an efficient method for hotel management. If the method is adopted, for the customer, the professional, and the hotelier, self-service order placement, self-service order taking, and transaction can be quickly achieved through the Internet. On the other hand, the professional is also treated as a hotel partner to cooperate with the hotelier for hotel management, which is possible to fully motivate the professional to work with high enthusiasm. Therefore, it is possible to greatly improve efficiency in hotel management while reducing labor cost and operating cost of the hotel. In addition, according to implementations provided herein, execution of the smart contract and non-tamperability of information in the blockchain can be ensured with the blockchain, thereby ensuring openness and transparency of transaction and ensuring rights and interests of the customer, the professional, and the hotelier. Therefore, efficiency in hotel management can be further improved with aid of the blockchain.

### BRIEF DESCRIPTION OF THE DRAWINGS

In order to describe more clearly the technical solution of implementations, the following will give a brief description of the accompanying drawings used for describing implementations.
FIG. 1 is a schematic flowchart of a method for hotel management according to implementations.
FIG. 2 is a schematic flowchart of a method for hotel management according to other implementations.
FIG. 3 is a schematic block diagram of an apparatus for hotel management according to implementations.
FIG. 4 is a schematic structural diagram of a blockchain node server according to implementations.

### DETAILED DESCRIPTION

Technical solution of implementations will be described clearly and completely with reference to accompanying drawings in implementations. It can be understood that, implementations described herein are merely some implementations, rather than all implementations, of the present disclosure. All other implementations obtained by those of ordinary skill in the art based on the implementations described herein without creative effort shall fall within the protection scope of the disclosure.

The technical solution of implementations is mainly applicable to an apparatus for hotel management. The apparatus for hotel management may be a conventional apparatus for hotel management or an apparatus for hotel management described in a third implementation of the disclosure, and the disclosure is not limited in this regard. In addition, the apparatus for hotel management is applicable to a blockchain node server described in a fourth implementation of the disclosure. Before data transmission, the apparatus for hotel management records characteristics of data in a predetermined format for transmission, where the characteristics of data include time, location, type, etc.

Service quality is an important criterion for measuring quality of hotel management. In order to provide a high-quality service, hotel managers often try to improve a management system of their own hotel by following a management system of a first-class hotel. However, in fact, it is useless to follow blindly an advanced hotel management system, and on the other hand, a same hotel system may not apply to all hotels. The service quality of the hotel depends essentially on comprehensive quality of professionals. The service quality of the hotel can be truly improved only by improving the comprehensive quality of professionals. As one of the fastest and easiest manners to improve the service quality of the hotel, a large number of high-quality professionals can be hired. As a result, although the service quality can be improved, costs of the hotel will increase significantly. Therefore, how to improve the service quality of the hotel without increasing the costs of the hotel has become a problem to be solved.

In this regard, implementations provide a method for hotel management based on a blockchain. If the method is adopted, existing professionals can be motivated to work with high enthusiasm, which is possible to improve service quality of the professionals, thereby improving greatly the service quality of the hotel without increasing the costs of the hotel.

It should be noted that, the blockchain is introduced to the technical solution of implementations. The blockchain is a chain data structure in which blocks are strung together in a chronological order and a cryptographically guaranteed tamper-proof and non-forgeable distributed ledger.

Characteristics of the blockchain include openness, consensus, decentralization, detrust, transparency, anonymity on both sides, immutability and traceability. Openness and transparency mean that anyone can participate in a blockchain network. Each device can serve as a node, and each node is allowed to receive a complete copy of database. Based on a set of consensus mechanisms, nodes jointly maintain the entire blockchain through competitive calculations. If any node fails, the remaining nodes can still work normally. Decentralization and detrust mean that the blockchain includes many nodes together to form an end-to-end network without centralized equipment and management agency. Data exchange between nodes is verified based on digital signature technology without need to trust each other. Nodes cannot and are unable to cheat other nodes as long as data exchange is performed according to established rules of a system. Transparency and anonymity on both sides mean that operating rules of the blockchain are public and all data information is also public, and therefore every transaction is visible to all nodes. Since nodes are detrusted, there is no need to disclose identities between nodes, and each participating node is anonymous. Immutability and traceability mean that modification of the database by each or multiple nodes cannot affect the databases of other nodes, unless more than 51% of the nodes in the entire network can be controlled to modify at the same time, which is almost impossible. In the blockchain, each transaction is connected in series with two adjacent blocks by cryptography and therefore can be traced back to the past and present of any transaction.

Specifically, the blockchain is a new type of distributed infrastructure and computing manner which can verify and store data with a blockchain data structure, generate and update data with a distributed node consensus algorithm, ensure security of data transmission and access in a cryptographical manner, and program and manipulate data with a smart contract including automation script code. Therefore, immutability of blockchain technology has fundamentally altered a centralized credit creation manner, which improves effectively immutability and security of data. Since all terms in the smart contract are written as programs, these terms can be automatically executed on the blockchain, which ensures that when conditions for triggering the smart contract exist, the blockchain can enforce execution according to content of the smart contract without being obstructed by any external force, thereby ensuring validity and execution of the contract. As such, it is possible not only to greatly reduce costs but also to improve efficiency. Each node on the blockchain has the same ledger, which can ensure that a ledger recording process is open and transparent. Blockchain technology can achieve a peer-to-peer, open and transparent direct interaction, which realizes a highly efficient, large-scale, decentralized proxy information interaction manner.

Implementations of the disclosure are mainly applied to a blockchain node server. The blockchain node server has many types, which may be a traditional server, a large storage system, a desktop computer, a notebook computer, a tablet computer, a palmtop computer, a smart phone, a portable digital player, a smart watch, a smart bracelet, and the like. The blockchain node server is one of servers in the blockchain network that is determined according to the consensus mechanism. It should be understood that, since the blockchain is a decentralized distributed database, each time data is processed, one of the servers in the blockchain network needs to be selected as a performer for data processing. A rule for selecting a server each time is referred to as the consensus mechanism. The consensus mechanism referred to herein may be a proof of work (POW) mechanism, a proof of stake (POS) mechanism, or a ripple consensus mechanism, and a delegated proof of stake (DPOS) mechanism, etc, which is not limited herein. A terminal according to implementations includes, but is not limited to, a device with a communication function, a smart phone, a tablet computer, a notebook computer, a desktop computer, a portable digital player, a smart bracelet, a smart watch, and the like.

In implementations of the disclosure, raw data is data uploaded by the terminal to the blockchain node server for storage. The raw data is recorded by the terminal in a predetermined format. It should be understood that, the content of the data includes characteristics such as time, location, type, etc. The terminal can record these characteristics of the data in a predetermined format and thus generate raw data to be sent to the blockchain node server.

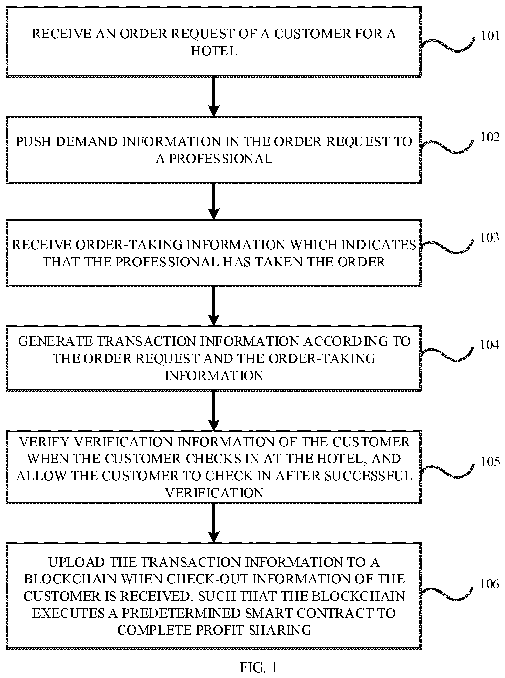

FIG. 1 is a schematic flowchart of a method for hotel management according to implementations. The method is applicable to a blockchain node server. As illustrated in FIG. 1, the method includes the following.

At step 101, an order request of a customer for a hotel is received.

According to implementations, a local apparatus for hotel management receives the order request of the customer for the hotel. The order request may be inputted into a local apparatus (that is, the local apparatus for hotel management) by the customer through an input unit of the local apparatus, or may be sent to the local apparatus by the customer through a terminal device of the customer, or may be sent to the local apparatus by the customer through a terminal device of the hotel, and the disclosure is not limited in this regard. In addition, the order request can be sent to the local apparatus via a blockchain, that is, the order request is recorded in the blockchain and can be downloaded and consulted by the local apparatus at any time, and the order request recorded in the blockchain is tamper-proof. The order request includes account information of the customer, demand information of the customer, and at least one identity label of the customer.

It should be noted that, the account information in the order request includes a transaction account of the customer and at least one identity label of the customer. The account information of the customer includes the transaction account of the customer and the at least one identity label of the customer. The transaction account of the customer may include, for example, a bank account, a financial management application account, etc. of the customer. The at least one identity label of the customer may include, for example, a character label (such as an identification (ID) card number), a biometric label (such as a fingerprint, an iris, a voiceprint, etc.), etc. of the customer, and the disclosure is not limited in this regard. The demand information may include a hotel ID, a room type, an occupancy time period, and the like. The at least one identity label of the customer may include, for example, the character label (such as the ID card number), the biometric label (such as the fingerprint, the iris, the voiceprint, etc.), etc. of the customer. The transaction account of the customer can be applied to a traditional deposit business or credit loan business of a bank. The transaction account of the customer includes a balance of funds. The funds can be any physical or virtual currency that can be used as a medium for exchange such as traditional banknotes, precious metals, and virtual currencies (e.g. Bitcoin), and the disclosure is not limited in this regard.

In addition, the phrase "the order request is recorded in the blockchain" means that the order request is stored in the blockchain considering security and immutability of the blockchain. The blockchain includes multiple blocks connected according to a time axis. The blockchain is called a chain for the reason that blocks have continuity. The block is a data structure that records data and includes a block header and a block body. The block body (that is, data part) is only responsible for recording data information stored in a previous time period. The block header is responsible for implementing most functions of the blockchain. The continuity of blocks mentioned above lies in that data in a block header of a previous block is hashed to generate a hash value, and the hash value is then written into a block header of a next block. Starting from a genesis block, each block performs this operation, and as such, the blocks have continuity. This also explains immutability and traceability of the block in another aspect. Therefore, a server can record the order request and any other data in the blockchain to ensure openness, non-tamperability, and anonymity of data. For a process of uploading other information to the blockchain, details will not be elaborated in implementations.

By recording information in the blockchain, it is beneficial to data transmission between the hotel and the blockchain, or data transmission through the blockchain between the hotel and other hotels registered in the blockchain, and it is convenient for the blockchain to obtain a hotel occupancy status of the customer to establish a transparent and secure information network, which can facilitate evaluation of a credit status of the customer, such that establishment of a hotel-based credit system can facilitate subsequent development of the Internet of Things (IoT).

In some implementations, before receiving the order request of the customer for the hotel, the following can be conducted. Registration information of the hotelier, registration information of the professional, and registration information of the customer are received. The registration information of the hotelier, the registration information of the professional, and the registration information of the customer are verified. After successful verification, account information of the hotelier, account information of the professional, and the account information of the customer are created according to the registration information of the hotelier, the registration information of the professional, and the registration information of the customer. The registration information of the hotelier, the registration information of the professional, the registration information of the customer, the account information of the customer, the account information of the professional, and the account information of the hotelier are uploaded to the blockchain.

According to implementations, before receiving the order request and performing operations according to the order request, the local apparatus first verifies an identity of the customer, an identity of the hotelier, and an identity of the professional. After successful verification, the local apparatus registers the customer, the hotelier, and the professional in the blockchain and opens an account of the customer, an account of the hotelier, and an account of the professional respectively. Upon receiving the registration information of the hotelier, the local apparatus verifies the registration information of the hotelier. If the identity of the hotelier is determined to be true, verification succeeds, and the local apparatus creates the account information of the hotelier according to the registration information of the hotelier. Then the local apparatus uploads the registration information of the hotelier and the account information of the hotelier to the blockchain, such that the hotelier is registered in the blockchain and the account of the hotelier is opened. Upon receiving the registration information of the customer, the local apparatus verifies the registration information of the customer. If the identity of the customer is determined to be true, verification succeeds, and the local apparatus creates the account information of the customer according to the registration information of the customer. Then the local apparatus uploads the registration information of the customer and the account information of the customer to the blockchain, such that the customer is registered in the blockchain and the account of the customer is opened. Upon receiving the registration information of the professional, the local apparatus verifies the registration information of the professional. If the identity of the professional is determined to be true, verification succeeds, and the local apparatus creates the account information of the professional according to the registration information of the professional. Then the local apparatus uploads the registration information of the professional and the account information of the professional to the blockchain, such that the professional is registered in the blockchain and the account of the professional is opened.

It should be noted that, the account information of the professional includes a transaction account of the professional and at least one identity label of the professional. The transaction account of the professional may include, for example, a bank account, a financial management application account, etc. of the professional. The at least one identity label of the professional may include, for example, a character label (such as an ID card number), a biometric label (such as a fingerprint, an iris, or a voiceprint), etc. of the professional, and the disclosure is not limited in this regard. The account information of the hotelier includes a transaction account of the hotelier, at least one identity label of the hotelier, and at least one hotel ID of the hotel. The transaction account of the hotelier may include, for example, a bank account, a financial management application account, etc. of the hotelier. The at least one identity label of the hotelier may include, for example, a character label (such as an ID card number), a biometric label (such as a fingerprint, an iris, or a voiceprint), etc. of the professional, and the disclosure is not limited in this regard. The at least one hotel ID may be, for example, a character label that can uniquely identify and verify the hotel.

In addition, registration information of a user (including the customer, the hotelier, and the professional) is verified as follows. The registration information of the user is compared with information of the user stored in the blockchain. If there is any mistake in the registration information of the user, verification fails; otherwise, verification is successful.

In addition, account information of the user includes an account ID of the user, and a transaction account and at least one identity label in the registration information of the user. The account information of the user is created according to the registration information of the user as follows. An account ID that is applicable to a hotel system within a present region is generated for the user, and the transaction account and the at least one identity label in the registration information of are retrieved. It should be noted that, the account information may include all identity labels in the registration information, or include only some identity labels in the registration information.

According to implementations, registration of the user (including the customer, the hotelier, and the professional) and account opening are achieved by uploading the registration information and the account information of the user to the blockchain. The reason is that by saving the registration information and the account information of the user in the blockchain, the registration information and the account information can be guaranteed to be tamper-proof. Therefore, registration of the user can be considered to be completed only after the registration information and the account information have been uploaded to the blockchain, and thus an account is opened.

**In** another example, the registration information and the account information are first associated together and then uploaded to the blockchain. In this way, the local apparatus, or other terminal devices or servers can obtain one of the registration information and the account information by querying for the other one of the registration information and the account information.

In some implementations, upon receiving the registration information of the hotelier, the following can be conducted before verifying the registration information of the hotelier. An instruction for business qualification certification is pushed to the hotelier, where the instruction for business qualification certification is used for instructing the hotelier to send business qualification certification information, and the business qualification certification information indicates that the hotelier is qualified. After the business qualification certification information of the hotelier is received, the business qualification certification information is added to the registration information of the hotelier.

According to implementations, when the identity of the hotelier is verified, it is necessary to verify whether the hotelier is qualified in addition to verifying the identity of the hotelier. When the registration information of the hotelier is received, the instruction for business qualification certification is pushed to the hotelier to prompt the hotelier to send the business qualification certification information. When the business qualification certification information is received from the hotelier, the business qualification certification information is added to the registration information of the hotelier, such that the business qualification certification information of the hotelier can be verified during verification of the registration information of the hotelier in future. The business qualification certification information may include at least one of a special industry business license, a fire inspection qualification submission, a hygiene license, a food circulation license, and a catering service business license.

It should be noted that, after the business qualification certification information is added to the registration information of the hotelier, the registration information of the hotelier is verified as follows. The account information, the at least one identity label, and the business qualification certification information in the registration information of the hotelier are compared respectively with account information, at least one identity label, and business qualification certification information of the hotelier stored in the blockchain. If there is any mistake in the registration information of the hotelier, verification fails; otherwise, verification succeeds.

In other implementations, upon receiving the registration information of the professional, the following can be conducted before verifying the registration information of the professional. An instruction for service qualification certification is pushed to the professional. Service qualification certification information of the professional is received, where the service qualification certification information indicates that the professional is qualified. The service qualification certification information is added to the registration information of the professional.

According to implementations, when the identity of the professional is verified, it is necessary to verify whether the professional is qualified in addition to verifying the identity of the professional. When the registration information of the professional is received, the instruction for service qualification certification is pushed to the professional to prompt the professional to send the service qualification certification information. When the service qualification certification information is received from the professional, the service qualification certification information is added to the registration information of the professional, such that the service qualification certification information of the professional can be verified during verification of the registration information of the professional in future. The service qualification certification information may include a vocational skill appraisal certificate for room attendants, a hotel English certificate, a health certificate, and the like, and the disclosure is not limited in this regard.

It should be noted that, after the service qualification certification information is added to the registration information of the professional, the registration information of the professional is verified as follows. The account information, the at least one identity label, and the service qualification certification information in the registration information of the professional are compared respectively with account information, at least one identity label, and service qualification certification information of the professional stored in the blockchain. If there is any mistake in the registration information of the professional, verification fails; otherwise, verification succeeds.

In addition, creation of the account information of the hotelier according to the registration information of the hotelier is not affected by operations of adding the business qualification certification information to the registration information of the hotelier because the business qualification certification information is not used in creation of an account. Similarly, creation of the account information of the professional according to the registration information of the professional is not affected by operations of adding the service qualification certification information to the registration information of the professional.

In another example, after the business qualification certification information is added to the registration information of the hotelier, the account information of the hotelier created according to the registration information of the hotelier includes some or all information in the business qualification certification information. Similarly, after the service qualification certification information is added to the registration information of the professional, the account information of the professional created according to the registration information of the professional includes some or all information in the service qualification certification information.

In other implementations, upon receiving the registration information of the customer, the following can be conducted before verifying the registration information of the customer. An instruction for setting preferences is pushed to the customer. Preference information of the customer is received, where the preference information is indicative of customer preferences. The preference information is added to the registration information of the customer.

According to implementations, after the registration information is received and is determined to be the registration information of the customer, it is desirable to obtain the preference information of the customer. After the registration information of the customer is received, the instruction for setting preferences is pushed to the customer to prompt the customer to send the preference information. After the preference information is received from the customer, some or all of the preference information is added to the registration information of the customer. It should be noted that, verification of the registration information of the customer is not affected by operations of adding the preference information to the registration information of the customer. In other words, the preference information in the registration information of the customer is not verified during verification of the registration information of the customer, and the preference information makes no difference to success or failure in verification. In addition, after the preference information is added to the registration information of the customer, during creation of the account information of the customer according to the registration information of the customer, some or all of the preference information in the registration information of the customer is added to the account information of the customer. As such, the account information of the customer created according to the registration information of the customer includes the preference information.

As can be seen, the registration information and the account information of the customer both include the preference information of the customer, such that the professional can obtain the preference information of the customer by searching for the registration information or the account information of the customer, so as to provide better service.

At step 102, demand information in the order request is pushed to the professional.

According to implementations, the demand information in the order request is retrieved and pushed to the professional, where the demand information is indicative of a demand of the customer. The demand information may include a hotel ID, a room type, an occupancy time period, and the like.

In another example, the demand information further includes the preference information of the customer. When the order request of the customer is received, before the demand information in the order request is pushed to the professional, the account information or the registration information of the customer is looked up according to the at least one identity label of the customer in the order request, and some or all of the preference information is retrieved from the account information or the registration information of the customer and added to the demand information. The demand information including the preference information is sent to the professional, such that the professional can better know preferences of the customer to provide better service.

It should be noted that, the preference information is used as reference information for the professional to provide service to the customer. The preference information may include, for example, area required as focus of cleaning, preferred fragrance of perfume, etc.

At step 103, order-taking information is received, where the order-taking information indicates that the professional has taken the order.

According to implementations, after the demand information is sent to the professional, existence of the order-taking information sent by the professional is detected. If the order-taking information is detected, it indicates that the professional has taken the order and will provide service to the customer that has sent the order request. The order-taking information indicates that the professional has taken the order, and includes the account information of the professional.

At step 104, transaction information is generated according to the order request and the order-taking information.

According to implementations, when the order-taking information is received from the professional, the transaction information is generated according to the order request of the customer and the order-taking information. The transaction information indicates details of the transaction. The transaction information includes a transaction amount, the account information of the customer, the account information of the professional, and the account information of the hotelier.

It should be noted that, the transaction information is generated according to the order request and the order-taking information as follows. The transaction amount is calculated according to the demand information in the order request, and the account information of the hotelier is looked up according to the hotel ID in the demand information. Then the transaction amount, the account information of the hotelier, the account information of the customer in the order request, and the account information of the professional in the order-taking information are collected to generate the transaction information.

In another example, after the transaction information is generated, if a room of the hotel is unlocked with a password, a password for identity verification (such as a character password, a graphical password, etc.) is pushed to the customer for identity verification, such that the room is directly unlocked or a room key is obtained. If the room is unlocked in a biometric manner, identity verification can be performed with a fingerprint or a voiceprint of the customer, such that the room is directly unlocked or a room key is obtained. There is no restriction on the manner of unlocking in implementations.

At step 105, verification information of the customer is verified when the customer checks in at the hotel, and the customer is allowed to check in after successful verification.

According to the relevant laws and regulations, when the customer checks in at the hotel, a second confirmation of customer information and registration for check-in are required. According to implementations, information verification and registration for check-in are both performed with an unmanned reception desk when the customer checks in at the hotel, and verification of information data and registration are achieved through a blockchain node server. The verification information of the customer is verified when the customer checks in at the hotel, and the customer is allowed to check in after successful verification as follows. Identity verification information of the customer and the transaction information are received. Check-in verification is performed according to the identity verification information and the transaction information. Check-in information is generated according to the identity verification information and the transaction information after successful verification, and the check-in information is uploaded to the blockchain.

According to implementations, the verification information of the customer includes the identity verification information of the customer and the transaction information. The identity verification information refers to information that can uniquely confirm the identity of the customer such as the identity label of the customer, an account ID of the customer, or the like. The identity verification information of the customer and the transaction information are received as follows. The customer sends the identity verification information to the local apparatus for hotel management through the terminal device of the customer or the terminal device of the hotel. After receiving the identity verification information, the local apparatus for hotel management looks up the transaction information of the customer according to the identity verification information, and as such, the local apparatus for hotel management obtains the transaction information of the customer from other terminal devices or servers, or obtains the transaction information from a local database, which is not limited herein. Check-in verification is performed according to the identity verification information and the transaction information as follows. Whether the identity of the customer is true and whether an order of the customer is valid are verified according to the identity verification information and the transaction information. Whether the identity of the customer is true is verified as follows. The identity label of the customer in the identity verification information and the transaction information is compared with an identity label of the customer stored in the blockchain. If matched, it indicates that the identity of the customer is true; otherwise, the identity of the customer is false. Whether the order of the customer is valid is verified as follows. Whether a current time matches an expected check-in time of the customer in the transaction information is verified. If matched, check-in verification is successful. For example, the expected check-in time of the customer included in the transaction information corresponds to a check-in time period. If the current time is within the check-in time period, the current time is determined to match the expected check-in time of the customer in the transaction information, that is, check-in verification is determined to be successful. The check-in information is generated according to the identity verification information and the transaction information after successful verification, and the check-in information is uploaded to the blockchain as follows. Some or all of the transaction information, and the identity verification information are collected to obtain the check-in information which indicates that the customer has checked in successfully, and the check-in information is uploaded to the blockchain, such that the check-in information is saved in the blockchain. The phrase "the check-in information is generated" means that identity verification is completed. The phrase "the check-in information is uploaded to the blockchain" means that check-in registration is completed.

At step 106, the transaction information is uploaded to the blockchain when check-out information of the customer is received, such that the blockchain executes a predetermined smart contract to complete profit sharing.

According to implementations, whether the check-out information of the customer is received is detected. If the check-out information of the customer is detected, the transaction information is uploaded to the blockchain to trigger execution of the smart contract in the blockchain, so that profit sharing is completed according to a profit-sharing ratio indicated by the smart contract. The smart contract includes a profit-sharing ratio between the professional and the hotelier. The smart contract is indicative of the profit-sharing ratio between the professional and the hotelier.

For example, the profit-sharing ratio between the professional and the hotelier recorded in the smart contract is x/y, and the transaction amount recorded in the transaction information is ¥n. When the smart contract is executed, ¥n is deducted from the account of the customer according to the account information of the customer and then transferred respectively to the account of the professional and the account of the hotelier according to the ratio of x/y to complete profit sharing.

In some implementations, the transaction information further includes a room type selected by the customer, that is, the room type included in the demand information in the transaction information, and the smart contract is indicative of a profit-sharing ratio between the professional and the hotelier corresponding to the room type selected by the customer. The transaction information is uploaded to the blockchain when the check-out information of the customer is received, such that the blockchain executes the predetermined smart contract to complete profit sharing as follows. The transaction information is uploaded to the blockchain when the check-out information of the customer is received, such that the blockchain executes the predetermined smart contract to obtain the profit-sharing ratio corresponding to the room type in the transaction information and complete profit sharing according to the profit-sharing ratio corresponding to the room type.

According to implementations, the profit-sharing ratio between the professional and the hotelier varies according to different room types. A profit proportion of the professional is inversely proportional to a unit price of the room type, and a profit proportion of the hotelier is directly proportional to the unit price of the room type. When the unit price of the room type is high, the profit proportion of the professional is low and the profit proportion of the hotelier is high. The transaction information is uploaded to the blockchain to trigger execution of the smart contract for profit sharing between the professional and the hotelier as follows. The profit-sharing ratio corresponding to the room type in the transaction information is obtained from the smart contract, and profit sharing is performed according to the profit-sharing ratio corresponding to the room type.

For example, the hotel includes room type A, room type B, and room type C that are sorted in a descending order of unit price (that is, from high to low). A profit-sharing ratio between the professional and the hotelier corresponding to room type A is 1/9, a profit-sharing ratio between the professional and the hotelier corresponding to room type B is 3/7, and a profit-sharing ratio between the professional and the hotelier corresponding to room type C is 5/5. Assuming that the room type included in the transaction information is room type B, the profit-sharing ratio between the professional and the hotelier is 3/7. If the transaction amount is ¥100, the professional can gain ¥30, and the hotelier can gain ¥70.

In other implementations, the check-out information further includes a service score, and the smart contract is indicative of the profit-sharing ratio between the professional and the hotelier and an adjustment rule for adjusting the profit-sharing ratio according to the service score. The transaction information is uploaded to the blockchain when the check-out information of the customer is received, such that the blockchain executes the predetermined smart contract to complete profit sharing as follows. The check-out information of the customer and the transaction information are uploaded to the blockchain when the check-out information is received, such that the blockchain executes the predetermined smart contract to adjust the profit-sharing ratio according to the service score in the check-out information and complete profit sharing according to the adjusted profit-sharing ratio.

According to implementations, when the check-out information is received from the customer, the check-out information and the transaction information are both uploaded to the blockchain to trigger execution of the smart contract in the blockchain, that is, to adjust, based on the adjustment rule for adjusting the profit-sharing ratio in the smart contract, the profit-sharing ratio according to the service score in the check-out information. When the service score is high, the profit proportion of the professional is high and the profit proportion of the hotelier is low. In other words, the profit proportion of the professional is directly proportional to the service score, and the profit proportion of the hotelier is inversely proportional to the service score. After the profit proportion of the professional and the profit proportion of the hotelier are adjusted, adjustment of the profit-sharing ratio is completed, and then profit sharing is completed according to the adjusted profit-sharing ratio. As can be seen, besides completing profit sharing between the professional and the hotelier, the smart contract according to implementations can be indicative of the adjustment rule for adjusting the profit-sharing ratio according to the service score. In this way, the profit-sharing ratio between the professional and the hotelier depends on the service score fed back by the customer, and the service score is indicative of service quality of the professional.

For example, the profit-sharing ratio between the professional and the hotelier recorded in the smart contract is 3/7. The service quality of the professional is set to have five grades that are sorted in an ascending order (that is, from low to high), i.e. grade **1,** grade 2, grade 3, grade 4, and grade 5, and an adjustment rule corresponding to each of the five grades is respectively as follows: lowering the profit proportion of the professional by 1 and raising the profit proportion of the hotelier by 1, lowering the profit proportion of the professional by 0.5 and raising the profit proportion of the hotelier by 0.5, maintaining the profit-sharing ratio, raising the profit proportion of the professional by 0.5 and lowering the profit proportion of the hotelier by 0.5, and raising the profit proportion of the professional by 1 and lowering the profit proportion of the hotelier by 1. Supposing that the service score in the check-out information falls into grade 4, the profit-sharing ratio between the professional and the hotelier is 3.5/6.5. If the transaction amount is ¥100, the professional can gain ¥35, and the hotelier can gain ¥65.

In another example, the transaction information further includes the room type selected by the customer, the check-out information further includes the service score, and the smart contract is indicative of the profit-sharing ratio between the professional and the hotelier corresponding to the room type and an adjustment rule for adjusting the profit-sharing ratio corresponding to the room type according to the service score. Accordingly, the transaction information is uploaded to the blockchain when the check-out information of the customer is received, such that the blockchain executes the predetermined smart contract to complete profit sharing as follows. The check-out information and the transaction information are uploaded to the blockchain when the check-out information is received, such that the blockchain executes the predetermined smart contract to obtain the profit-sharing ratio corresponding to the room type in the transaction information, to adjust the profit-sharing ratio corresponding to the room type according to the service score in the check-out information, and to complete profit sharing according to the adjusted profit-sharing ratio corresponding to the room type.

In this example, the above two implementations are combined. When the check-out information is received, the check-out information and the transaction information are uploaded to the blockchain to trigger execution of the smart contract in the blockchain. The profit-sharing ratio corresponding to the room type in the transaction information is looked up in the smart contract. Based on the adjustment rule in the smart contract, the profit-sharing ratio corresponding to the room type in the transaction information is adjusted according to the service score in the check-out information. As can be seen, the profit-sharing ratio between the professional and the hotelier may vary according to the room type and/or the service score. The profit proportion of the professional is inversely proportional to the unit price of the room type and is directly proportional to the service score. The profit proportion of the hotelier is directly proportional to the unit price of the room type and is inversely proportional to the service score. Different room types correspond to different profit-sharing ratios, different service scores correspond to different adjustment rules, and for different room types, the same service score corresponds to the same adjustment rule.

For example, the hotel includes room type A, room type B, and room type C that are sorted in a descending order of unit price. A profit-sharing ratio between the professional and the hotelier corresponding to room type A is 1/9, a profit-sharing ratio between the professional and the hotelier corresponding to room type B is 3/7, and a profit-sharing ratio between the professional and the hotelier corresponding to room type C is 5/5. In addition, according to a score range which the service score fed back by the customer falls into, the service quality of the professional is set to have five grades that are sorted in an ascending order, i.e. grade 1, grade 2, grade 3, grade 4, and grade 5, and an adjustment rule corresponding to each of the five grades is respectively as follows: lowering the profit proportion of the professional by 1 and raising the profit proportion of the hotelier by 1, lowering the profit proportion of the professional by 0.5 and raising the profit proportion of the hotelier by 0.5, maintaining the profit-sharing ratio, raising the profit proportion of the professional by 0.5 and lowering the profit proportion of the hotelier by 0.5, and raising the profit proportion of the professional by 1 and lowering the profit proportion of the hotelier by 1. Supposing that the room type in the transaction information is room type B, and the service score in the check-out information falls into grade 4, the profit-sharing ratio between the professional and the hotelier is 3.5/6.5. If the transaction amount is ¥100, the professional can gain ¥35, and the hotelier can gain ¥65.

In another example, under the same service score, the adjustment rule varies according to different room types. For example, if the room type is room type A, and the service score falls into grade 4, the adjustment rule is to lower the profit proportion of the professional by 1 and raise the profit proportion of the hotelier by 1. If the room type is room type B, and the service score falls into grade 4, the adjustment rule is to lower the profit proportion of the professional by 0.5 and raise the profit proportion of the hotelier by 0.5. As can be seen, when the unit price of the room type is high, an adjustment range of the adjustment rule is high. The reason is that a room type of high unit price corresponds to a low profit proportion of the professional, and as such, by raising the adjustment range of the adjustment rule corresponding to the room type of high unit price, the professional can be motivated to work with high enthusiasm and thus provide better service to high-spending customers, which is possible to increase income of both the professional and the hotelier, thereby achieving a mutual-win result and meanwhile improving greatly efficiency in hotel management.

According to implementations, the profit-sharing ratio between the professional and the hotelier may be determined according to the room type, or determined according to the service score fed back by the customer, or determined according to a combination of the room type and the service score. In terms of determining the profit-sharing ratio according to a combination of the room type and the service score, under the same service score, the adjustment rule may even vary according to different room types. In this way, implementations set forth herein can provide various manners of determining the profit-sharing ratio between the professional and the hotelier.

According to implementations provided herein, upon receiving the order request of the customer for the hotel, the demand information in the order request is sent to the professional. Upon receiving the order-taking information which indicates that the professional has taken the order, the transaction information is generated according to the order request and the order-taking information. When the customer checks in at the hotel, identity verification is performed on the customer, and the customer is allowed to check in after successful verification. Upon receiving the check-out information of the customer, the transaction information is uploaded to the blockchain to trigger execution of the smart contract in the blockchain, to deduct from the account of the customer an amount indicated by the transaction amount and transfer the deducted amount to the account of the professional and the account of the hotelier respectively according to the profit-sharing ratio between the professional and the hotelier. Implementations provide an efficient method for hotel management. If the method is adopted, for the customer, the professional, and the hotelier, self-service order placement, self-service order taking, and transaction can be quickly achieved through the Internet. On the other hand, the professional is also treated as a hotel partner to cooperate with the hotelier for hotel management, which is possible to fully motivate the professional to work with high enthusiasm. Therefore, efficiency in hotel management can be greatly improved while reducing labor cost and operating cost of the hotel. In addition, according to implementations provided herein, execution of the smart contract and non-tamperability of information in the blockchain are ensured with the blockchain, thereby ensuring openness and transparency of transaction and ensuring rights and interests of the customer, the professional, and the hotelier. Therefore, efficiency in hotel management can be further improved with aid of the blockchain.

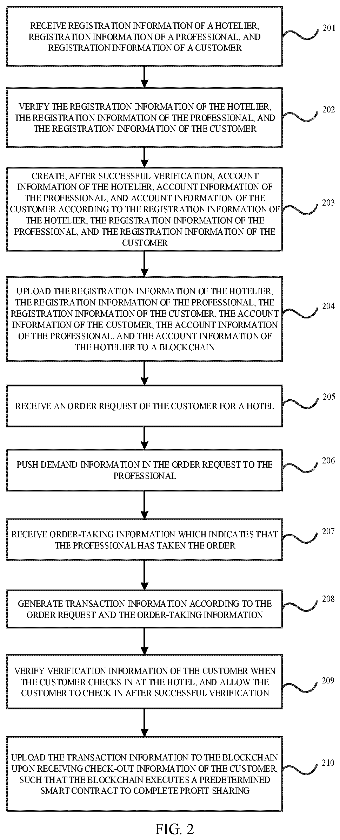

FIG. 2 is a schematic flowchart of a method for hotel management according to other implementations. As illustrated in FIG. 2, the method includes the following.

At step 201, registration information of a hotelier, registration information of a professional, and registration information of a customer are received.

According to implementations, the registration information of the hotelier, registration information of the professional, and registration information of the customer are received, where the registration information of the hotelier, the registration information of the professional, and the registration information of the customer may be received from terminal devices of users (that is, a terminal device of the hotelier, a terminal device of the professional, and a terminal device of the customer) respectively, or may be received from an apparatus for hotel management of a hotel, and the disclosure is not limited in this regard. In addition, the registration information includes a transaction account and at least one identity label. The registration information of the customer includes a transaction account of the customer and at least one identity label of the customer. The registration information of the professional includes a transaction account of the professional and at least one identity label of the professional. The registration information of the hotelier includes a transaction account of the hotelier, at least one identity label of the hotelier, and a hotel ID.

The transaction account may include, for example, a bank account, a financial management application account, etc. The at least one identity label may include, for example, a character label (such as an ID card number), a biometric label (such as a fingerprint, an iris, or a voiceprint), and the like, and the disclosure is not limited in this regard. In addition, compared with the registration information of the customer and the registration information of the professional, the registration information of the hotelier further includes the hotel ID, where the hotel ID can uniquely identify and verify the hotel and may be, for example, a character combination containing at least one type of character among numbers, letters, and special characters.

At step 202, the registration information of the hotelier, the registration information of the professional, and the registration information of the customer are verified.

According to implementations, when the registration information of the hotelier, the registration information of the professional, and the registration information of the customer are received, the registration information of the hotelier, the registration information of the professional, and the registration information of the customer are verified. Registration information of a user (including the customer, the hotelier, and the professional) is verified as follows. The registration information of the user is compared with information of the user stored in a blockchain. If there is any mistake in the registration information of the user, verification fails; otherwise, verification is successful.

At step 203, after successful verification, account information of the hotelier, account information of the professional, and account information of the customer are created according to the registration information of the hotelier, the registration information of the professional, and the registration information of the customer.

According to implementations, if verification of the registration information of the hotelier is successful, the account information of the hotelier is created according to the registration information of the hotelier. The registration information of the hotelier and the account information of the hotelier are uploaded to the blockchain to register the hotelier on the blockchain and open an account of the hotelier. If verification of the registration information of the customer is successful, the account information of the customer is created according to the registration information of the customer. The registration information of the customer and the account information of the customer are uploaded to the blockchain to register the customer on the blockchain and open an account of the customer. If verification of the registration information of the professional is successful, the account information of the professional is created according to the registration information of the professional. The registration information of the professional and the account information of the professional are uploaded to the blockchain to register the professional on the blockchain and open an account of the customer.

The account information includes an account ID, and a transaction account and at least one identity label in the registration information. The account information is created according to the registration information as follows. An account ID that is applicable to a hotel system within a present region is generated for the user, and the transaction account and the at least one identity label in the registration information are retrieved. It should be noted that, the account information may include all identity labels in the registration information, or include only some identity labels in the registration information.

According to implementations, registration of the user (including the customer, the hotelier, and the professional) and account opening are achieved by uploading the registration information and the account information of the user to the blockchain. The reason is that by saving the registration information and the account information of the user in the blockchain, the registration information and the account information can be guaranteed to be tamper-proof. Therefore, registration of the user can be considered to be completed only after the registration information and the account information have been uploaded to the blockchain, and thus an account is opened.

In another example, the registration information and the account information are first associated together and then uploaded to the blockchain. In this way, a local apparatus, or other terminal devices or servers can obtain one of the registration information and the account information by querying for the other one of the registration information and the account information.

In some implementations, upon receiving the registration information of the hotelier, the following can be conducted before verifying the registration information of the hotelier. An instruction for business qualification certification is pushed to the hotelier, where the instruction for business qualification certification is used for instructing the hotelier to send business qualification certification information, and the business qualification certification information indicates that the hotelier is qualified. After the business qualification certification information of the hotelier is received, the business qualification certification information is added to the registration information of the hotelier.

In other implementations, upon receiving the registration information of the professional, the following can be conducted before verifying the registration information of the professional. An instruction for service qualification certification is pushed to the professional. Service qualification certification information of the professional is received, where the service qualification certification information indicates that the professional is qualified. The service qualification certification information is added to the registration information of the professional.

In another example, after the business qualification certification information is added to the registration information of the hotelier, the account information of the hotelier created according to the registration information of the hotelier includes some or all information in the business qualification certification information. Similarly, after the service qualification certification information is added to the registration information of the professional, the account information of the professional created according to the registration information of the professional includes some or all information in the service qualification certification information.

In other implementations, upon receiving the registration information of the customer, the following can be conducted before verifying the registration information of the customer. An instruction for setting preferences is pushed to the customer. Preference information of the customer is received, where the preference information is indicative of customer preferences. The preference information is added to the registration information of the customer.

At step 204, the registration information of the hotelier, the registration information of the professional, the registration information of the customer, the account information of the customer, the account information of the professional, and the account information of the hotelier are uploaded to the blockchain.

According to implementations, registration of the user (including the customer, the hotelier, and the professional) and account opening are achieved by uploading the registration information and the account information of the user to the blockchain. The reason is that by saving the registration information and the account information of the user in the blockchain, the registration information and the account information can be guaranteed to be tamper-proof. Therefore, registration of the user can be considered to be completed only after the registration information and the account information have been uploaded to the blockchain, and thus an account is opened.

In addition, the phrase "the registration information of the hotelier, the registration information of the professional, the registration information of the customer, the account information of the customer, the account information of the professional, and the account information of the hotelier are uploaded to the blockchain" means that the registration information and the account information are stored in the blockchain considering security and immutability of the blockchain. The blockchain includes multiple blocks connected according to a time axis. The blockchain is called a chain for the reason that blocks have continuity. The block is a data structure that records data and includes a block header and a block body. The block body (that is, data part) is only responsible for recording data information stored in a previous time period. The block header is responsible for implementing most functions of the blockchain. The continuity of blocks mentioned above lies in that data in a block header of a previous block is hashed to generate a hash value, and the hash value is then written into a block header of a next block. Starting from a genesis block, each block performs this operation, and as such, the blocks have continuity. This also explains immutability and traceability of the block in another aspect. Therefore, a server can record the order request and any other data in the blockchain to ensure openness, non-tamperability, and anonymity of data. For a process of uploading other information to the blockchain, details will not be elaborated in implementations.

By recording information in the blockchain, it is beneficial to data transmission between the hotel and the blockchain, or data transmission through the blockchain between the hotel and other hotels registered in the blockchain, and it is convenient for the blockchain to obtain a hotel occupancy status of the customer to establish a transparent and secure information network, which can facilitate evaluation of a credit status of the customer, such that establishment of a hotel-based credit system can facilitate subsequent development of the IoT.

At step 205, an order request of the customer for the hotel is received.

At step 206, demand information in the order request is pushed to the professional.

At step 207, order-taking information is received, where the order-taking information indicates that the professional has taken the order.

At step 208, transaction information is generated according to the order request and the order-taking information.

At step 209, verification information of the customer is verified when the customer checks in at the hotel, and the customer is allowed to check in after successful verification.

At step 210, the transaction information is uploaded to the blockchain upon receiving check-out information of the customer, such that the blockchain executes a predetermined smart contract to complete profit sharing.

According to implementations, whether the check-out information of the customer is received is detected. If the check-out information of the customer is detected, the transaction information is uploaded to the blockchain to trigger execution of the smart contract in the blockchain, so that profit sharing is completed according to a profit-sharing ratio indicated by the smart contract. The smart contract includes a profit-sharing ratio between the professional and the hotelier. The smart contract is indicative of the profit-sharing ratio between the professional and the hotelier.

For example, the profit-sharing ratio between the professional and the hotelier recorded in the smart contract is x/y, and a transaction amount recorded in the transaction information is ¥n. When the smart contract is executed, ¥n is deducted from the account of the customer according to the account information of the customer and then transferred respectively to an account of the professional and an account of the hotelier according to the ratio of x/y to complete profit sharing.

In some implementations, the transaction information further includes a room type included in the demand information, and the smart contract is indicative of a profit-sharing ratio between the professional and the hotelier corresponding to a room type selected by the customer.

According to implementations, the profit-sharing ratio between the professional and the hotelier varies according to different room types. A profit proportion of the professional is inversely proportional to a unit price of the room type, and a profit proportion of the hotelier is directly proportional to the unit price of the room type. When the unit price of the room type is high, the profit proportion of the professional is low and the profit proportion of the hotelier is high.

For example, the hotel includes room type A, room type B, and room type C that are sorted in a descending order of unit price. A profit-sharing ratio between the professional and the hotelier corresponding to room type A is 1/9, a profit-sharing ratio between the professional and the hotelier corresponding to room type B is 3/7, and a profit-sharing ratio between the professional and the hotelier corresponding to room type C is 5/5. Assuming that the room type included in the transaction information is room type B, the profit-sharing ratio between the professional and the hotelier is 3/7. If the transaction amount is ¥100, the professional can gain ¥30, and the hotelier can gain ¥70.

In other implementations, the check-out information of the customer and the transaction information are uploaded to the blockchain upon receiving the check-out information, such that the blockchain executes the predetermined smart contract to adjust the profit-sharing ratio according to a service score in the check-out information and complete profit sharing according to the adjusted profit-sharing ratio.

For example, the profit-sharing ratio between the professional and the hotelier recorded in the smart contract is 3/7. Service quality of the professional is set to have five grades that are sorted in an ascending order, i.e. grade 1, grade 2, grade 3, grade 4, and grade 5, and an adjustment rule corresponding to each of the five grades is respectively as follows: lowering the profit proportion of the professional by 1 and raising the profit proportion of the hotelier by 1, lowering the profit proportion of the professional by 0.5 and raising the profit proportion of the hotelier by 0.5, maintaining the profit-sharing ratio, raising the profit proportion of the professional by 0.5 and lowering the profit proportion of the hotelier by 0.5, and raising the profit proportion of the professional by 1 and lowering the profit proportion of the hotelier by 1. Supposing that the service score in the check-out information falls into grade 4, the profit-sharing ratio between the professional and the hotelier is 3.5/6.5. If the transaction amount is ¥100, the professional can gain ¥35, and the hotelier can gain ¥65.

According to implementations, when the check-out information is received from the customer, the check-out information and the transaction information are both uploaded to the blockchain to trigger execution of the smart contract in the blockchain, that is, to adjust, based on an adjustment rule for adjusting the profit-sharing ratio in the smart contract, the profit-sharing ratio according to the service score in the check-out information. When the service score is high, the profit proportion of the professional is high and the profit proportion of the hotelier is low. In other words, the profit proportion of the professional is directly proportional to the service score, and the profit proportion of the hotelier is inversely proportional to the service score. After the profit proportion of the professional and the profit proportion of the hotelier are adjusted, adjustment of the profit-sharing ratio is completed, and then profit sharing is completed according to the adjusted profit-sharing ratio. As can be seen, besides completing profit sharing between the professional and the hotelier, the smart contract according to implementations can be indicative of an adjustment rule for adjusting the profit-sharing ratio according to the service score. In this way, the profit-sharing ratio between the professional and the hotelier depends on the service score fed back by the customer, and the service score is indicative of the service quality of the professional.

In another example, the check-out information and the transaction information are uploaded to the blockchain upon receiving the check-out information, such that the blockchain executes the predetermined smart contract to adjust the profit-sharing ratio corresponding to the room type according to the service score in the check-out information and complete profit sharing according to the adjusted profit-sharing ratio corresponding to the room type. The smart contract is indicative of the profit-sharing ratio between the professional and the hotelier corresponding to the room type and the adjustment rule for adjusting the profit-sharing ratio according to the service score, where different room types correspond to different profit-sharing ratios. The transaction information includes the room type selected by the customer.

In this example, the above two implementations are combined. Upon receiving the check-out information, the check-out information and the transaction information are uploaded to the blockchain to trigger execution of the smart contract in the blockchain. The profit-sharing ratio corresponding to the room type in the transaction information is looked up in the smart contract. Based on the adjustment rule in the smart contract, the profit-sharing ratio corresponding to the room type in the transaction information is adjusted according to the service score in the check-out information. As can be seen, the profit-sharing ratio between the professional and the hotelier may vary according to the room type and/or the service score. The profit proportion of the professional is inversely proportional to the unit price of the room type and is directly proportional to the service score. The profit proportion of the hotelier is directly proportional to the unit price of the room type and is inversely proportional to the service score.

For example, the hotel includes room type A, room type B, and room type C that are sorted in a descending order of unit price. A profit-sharing ratio between the professional and the hotelier corresponding to room type A is 1/9, a profit-sharing ratio between the professional and the hotelier corresponding to room type B is 3/7, and a profit-sharing ratio between the professional and the hotelier corresponding to room type C is 5/5. In addition, according to a score range which the service score fed back by the customer falls into, the service quality of the professional is set to have five grades that are sorted in an ascending order, i.e. grade 1, grade 2, grade 3, grade 4, and grade 5, and an adjustment rule corresponding to each of the five grades is respectively as follows: lowering the profit proportion of the professional by 1 and raising the profit proportion of the hotelier by 1, lowering the profit proportion of the professional by 0.5 and raising the profit proportion of the hotelier by 0.5, maintaining the profit-sharing ratio, raising the profit proportion of the professional by 0.5 and lowering the profit proportion of the hotelier by 0.5, and raising the profit proportion of the professional by 1 and lowering the profit proportion of the hotelier by 1. Supposing that the room type in the transaction information is room type B, and the service score in the check-out information falls into grade 4, the profit-sharing ratio between the professional and the hotelier is 3.5/6.5. If the transaction amount is ¥100, the professional can gain ¥35, and the hotelier can gain ¥65.

In another example, under the same service score, the adjustment rule varies according to different room types. For example, if the room type is room type A, and the service score falls into grade 4, the adjustment rule is to lower the profit proportion of the professional by 1 and raise the profit proportion of the hotelier by 1. If the room type is room type B, and the service score falls into grade 4, the adjustment rule is to lower the profit proportion of the professional by 0.5 and raise the profit proportion of the hotelier by 0.5. As can be seen, when the unit price of the room type is high, an adjustment range of the adjustment rule is high. The reason is that a room type of high unit price corresponds to a low profit proportion of the professional, and as such, by raising the adjustment range of the adjustment rule corresponding to the room type of high unit price, the professional can be motivated to work with high enthusiasm and thus provide better service to high-spending customers, which is possible to increase income of both the professional and the hotelier, thereby achieving a mutual-win result and meanwhile improving greatly efficiency in hotel management.

According to implementations, the profit-sharing ratio between the professional and the hotelier may be determined according to the room type, or determined according to the service score fed back by the customer, or determined according to a combination of the room type and the service score. In terms of determining the profit-sharing ratio according to a combination of the room type and the service score, under the same service score, the adjustment rule may even vary according to different room types. In this way, implementations set forth herein can provide various manners of determining the profit-sharing ratio between the professional and the hotelier.

In some implementations, the transaction information further includes the room type selected by the customer, and the smart contract is indicative of the profit-sharing ratio between the professional and the hotelier corresponding to the room type selected by the customer. The transaction information is uploaded to the blockchain upon receiving the check-out information of the customer, such that the blockchain executes the predetermined smart contract to complete profit sharing as follows. The transaction information is uploaded to the blockchain upon receiving the check-out information of the customer, such that the blockchain executes the predetermined smart contract to obtain the profit-sharing ratio corresponding to the room type in the transaction information and complete profit sharing according to the profit-sharing ratio corresponding to the room type.

According to implementations, the profit-sharing ratio between the professional and the hotelier varies according to different room types. A profit proportion of the professional is inversely proportional to the unit price of the room type, and a profit proportion of the hotelier is directly proportional to the unit price of the room type. When the unit price of the room type is high, the profit proportion of the professional is low and the profit proportion of the hotelier is high. The transaction information is uploaded to the blockchain to trigger execution of the smart contract for profit sharing between the professional and the hotelier as follows. The profit-sharing ratio corresponding to the room type in the transaction information is obtained from the smart contract, and profit sharing is performed according to the profit-sharing ratio corresponding to the room type.

For example, the hotel includes room type A, room type B, and room type C that are sorted in a descending order of unit price. A profit-sharing ratio between the professional and the hotelier corresponding to room type A is 1/9, a profit-sharing ratio between the professional and the hotelier corresponding to room type B is 3/7, and a profit-sharing ratio between the professional and the hotelier corresponding to room type C is 5/5. Assuming that the room type included in the transaction information is room type B, the profit-sharing ratio between the professional and the hotelier is 3/7. If the transaction amount is ¥100, the professional can gain ¥30, and the hotelier can gain ¥70.

In other implementations, the check-out information further includes the service score, and the smart contract is indicative of the profit-sharing ratio between the professional and the hotelier and the adjustment rule for adjusting the profit-sharing ratio according to the service score. The transaction information is uploaded to the blockchain upon receiving the check-out information of the customer, such that the blockchain executes the predetermined smart contract to complete profit sharing as follows. The check-out information of the customer and the transaction information are uploaded to the blockchain upon receiving the check-out information, such that the blockchain executes the predetermined smart contract to adjust the profit-sharing ratio according to the service score in the check-out information and complete profit sharing according to the adjusted profit-sharing ratio.

According to implementations, when the check-out information is received from the customer, the check-out information and the transaction information are both uploaded to the blockchain to trigger execution of the smart contract in the blockchain, that is, to adjust, based on the adjustment rule for adjusting the profit-sharing ratio in the smart contract, the profit-sharing ratio according to the service score in the check-out information. When the service score is high, the profit proportion of the professional is high and the profit proportion of the hotelier is low. In other words, the profit proportion of the professional is directly proportional to the service score, and the profit proportion of the hotelier is inversely proportional to the service score. After the profit proportion of the professional and the profit proportion of the hotelier are adjusted, adjustment of the profit-sharing ratio is completed, and then profit sharing is completed according to the adjusted profit-sharing ratio. As can be seen, besides completing profit sharing between the professional and the hotelier, the smart contract according to implementations can be indicative of the adjustment rule for adjusting the profit-sharing ratio according to the service score. In this way, the profit-sharing ratio between the professional and the hotelier depends on the service score fed back by the customer, and the service score is indicative of the service quality of the professional.

For example, the profit-sharing ratio between the professional and the hotelier recorded in the smart contract is 3/7. The service quality of the professional is set to have five grades that are sorted in an ascending order, i.e. grade 1, grade 2, grade 3, grade 4, and grade 5, and an adjustment rule corresponding to each of the five grades is respectively as follows: lowering the profit proportion of the professional by 1 and raising the profit proportion of the hotelier by 1, lowering the profit proportion of the professional by 0.5 and raising the profit proportion of the hotelier by 0.5, maintaining the profit-sharing ratio, raising the profit proportion of the professional by 0.5 and lowering the profit proportion of the hotelier by 0.5, and raising the profit proportion of the professional by 1 and lowering the profit proportion of the hotelier by 1. Supposing that the service score in the check-out information falls into grade 4, the profit-sharing ratio between the professional and the hotelier is 3.5/6.5. If the transaction amount is ¥100, the professional can gain ¥35, and the hotelier can gain ¥65.

In another example, the transaction information further includes the room type selected by the customer, the check-out information further includes the service score, and the smart contract is indicative of the profit-sharing ratio between the professional and the hotelier corresponding to the room type and an adjustment rule for adjusting the profit-sharing ratio corresponding to the room type according to the service score. Accordingly, the transaction information is uploaded to the blockchain upon receiving the check-out information of the customer, such that the blockchain executes the predetermined smart contract to complete profit sharing as follows. The check-out information and the transaction information are uploaded to the blockchain upon receiving the check-out information, such that the blockchain executes the predetermined smart contract to obtain the profit-sharing ratio corresponding to the room type in the transaction information, to adjust the profit-sharing ratio corresponding to the room type according to the service score in the check-out information, and to complete profit sharing according to the adjusted profit-sharing ratio corresponding to the room type.

In this example, the above two implementations are combined. Upon receiving the check-out information, the check-out information and the transaction information are uploaded to the blockchain to trigger execution of the smart contract in the blockchain. The profit-sharing ratio corresponding to the room type in the transaction information is looked up in the smart contract. Based on the adjustment rule in the smart contract, the profit-sharing ratio corresponding to the room type in the transaction information is adjusted according to the service score in the check-out information. As can be seen, the profit-sharing ratio between the professional and the hotelier may vary according to the room type and/or the service score. The profit proportion of the professional is inversely proportional to the unit price of the room type and is directly proportional to the service score. The profit proportion of the hotelier is directly proportional to the unit price of the room type and is inversely proportional to the service score. Different room types correspond to different profit-sharing ratios, different service scores correspond to different adjustment rules, and for different room types, the same service score corresponds to the same adjustment rule.

For example, the hotel includes room type A, room type B, and room type C that are sorted in a descending order of unit price. A profit-sharing ratio between the professional and the hotelier corresponding to room type A is 1/9, a profit-sharing ratio between the professional and the hotelier corresponding to room type B is 3/7, and a profit-sharing ratio between the professional and the hotelier corresponding to room type C is 5/5. In addition, according to a score range which the service score fed back by the customer falls into, the service quality of the professional is set to have five grades that are sorted in an ascending order, i.e. grade 1, grade 2, grade 3, grade 4, and grade 5, and an adjustment rule corresponding to each of the five grades is respectively as follows: lowering the profit proportion of the professional by 1 and raising the profit proportion of the hotelier by 1, lowering the profit proportion of the professional by 0.5 and raising the profit proportion of the hotelier by 0.5, maintaining the profit-sharing ratio, raising the profit proportion of the professional by 0.5 and lowering the profit proportion of the hotelier by 0.5, and raising the profit proportion of the professional by 1 and lowering the profit proportion of the hotelier by 1. Supposing that the room type in the transaction information is room type B, and the service score in the check-out information falls into grade 4, the profit-sharing ratio between the professional and the hotelier is 3.5/6.5. If the transaction amount is ¥100, the professional can gain ¥35, and the hotelier can gain ¥65.

In another example, under the same service score, the adjustment rule varies according to different room types. For example, if the room type is room type A, and the service score falls into grade 4, the adjustment rule is to lower the profit proportion of the professional by 1 and raise the profit proportion of the hotelier by 1. If the room type is room type B, and the service score falls into grade 4, the adjustment rule is to lower the profit proportion of the professional by 0.5 and raise the profit proportion of the hotelier by 0.5. As can be seen, when the unit price of the room type is high, an adjustment range of the adjustment rule is high. The reason is that a room type of high unit price corresponds to a low profit proportion of the professional, and as such, by raising the adjustment range of the adjustment rule corresponding to the room type of high unit price, the professional can be motivated to work with high enthusiasm and thus provide better service to high-spending customers, which is possible to increase income of both the professional and the hotelier, thereby achieving a mutual-win result and meanwhile improving greatly efficiency in hotel management.

According to implementations, the profit-sharing ratio between the professional and the hotelier may be determined according to the room type, or determined according to the service score fed back by the customer, or determined according to a combination of the room type and the service score. In terms of determining the profit-sharing ratio according to a combination of the room type and the service score, under the same service score, the adjustment rule may even vary according to different room types. In this way, implementations set forth herein can provide various manners of determining the profit-sharing ratio between the professional and the hotelier.

Implementations have described a detailed method for hotel management, and in particular, a process of verifying an identity of the customer, an identity of the hotelier, and an identity of the professional, registering the customer, the hotelier, and the professional on the blockchain after successful verification, and opening the account of the customer, the account of the hotelier, and the account of the professional before the local apparatus receives the order request and performs some operations according to the order request. In addition, according to implementations provided herein, execution of the smart contract and non-tamperability of information in the blockchain are ensured with the blockchain, thereby ensuring openness and transparency of transaction and ensuring rights and interests of the customer, the professional, and the hotelier. Therefore, efficiency in hotel management can be further improved with aid of the blockchain. Implementations provide an efficient method for hotel management. If the method is adopted, for the customer, the professional, and the hotelier, self-service order placement, self-service order taking, and transaction can be quickly achieved through the Internet. On the other hand, the professional is also treated as a hotel partner to cooperate with the hotelier for hotel management, which is possible to fully motivate the professional to work with high enthusiasm. Therefore, it is possible to greatly improve efficiency in hotel management while reducing labor cost and operating cost of the hotel.

It should be noted that, description of each implementation above focuses on its differences from other implementations. For similarities between various implementations, reference can be made to the related part described in any one of these implementations. For the sake of simplicity, such similarities will not be repeated herein.

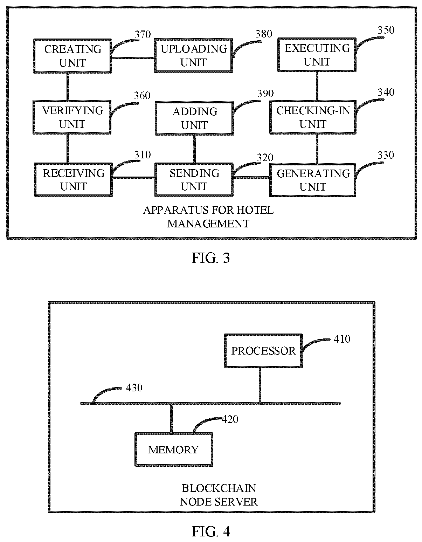

Implementations further provide an apparatus for hotel management. The apparatus is configured to perform the method for hotel management described in any one of the foregoing implementations. FIG. 3 is a schematic block diagram of an apparatus for hotel management according to implementations. The apparatus includes a receiving unit 310, a sending unit 320, a generating unit 330, a checking-in unit 340, and an executing unit 350.

The receiving unit 310 is configured to receive an order request of a customer for a hotel. The sending unit 320 is configured to push demand information in the order request to a professional, where the demand information is indicative of a demand of the customer. The receiving unit 310 is further configured to receive order-taking information which indicates that the professional has taken the order. The generating unit 330 is configured to generate transaction information according to the order request and the order-taking information, where the transaction information includes a transaction amount, account information of the customer, account information of the professional, and account information of a hotelier. The checking-in unit 340 is configured to verify verification information of the customer when the customer checks in at the hotel, and allow the customer to check in after successful verification. The executing unit 350 is configured to upload the transaction information to a blockchain when the receiving unit receives check-out information of the customer, such that the blockchain executes a predetermined smart contract to complete profit sharing, where the smart contract is indicative of a profit-sharing ratio between the professional and the hotelier.

According to the relevant laws and regulations, when the customer checks in at the hotel, a second confirmation of customer information and registration for check-in are required. According to implementations, information verification and registration for check-in are both performed with an unmanned reception desk when the customer checks in at the hotel, and verification of information data and registration are achieved through a blockchain node server. The checking-in unit 340 is configured to operate as follows. The checking-in unit 340 is configured to receive identity verification information of the customer and the transaction information. The checking-in unit 340 is configured to perform check-in verification according to the identity verification information and the transaction information. The checking-in unit 340 is configured to generate check-in information according to the identity verification information and the transaction information after successful verification and upload the check-in information to the blockchain.

In an example, the transaction information further includes a room type selected by the customer, and the smart contract is indicative of a profit-sharing ratio between the professional and the hotelier corresponding to the room type selected by the customer. The executing unit 350 is configured to upload the transaction information to the blockchain when the receiving unit receives the check-out information of the customer, such that the blockchain executes the predetermined smart contract to obtain the profit-sharing ratio corresponding to the room type in the transaction information and complete profit sharing according to the profit-sharing ratio corresponding to the room type.

In another example, the check-out information further includes a service score, and the smart contract is indicative of the profit-sharing ratio between the professional and the hotelier and an adjustment rule for adjusting the profit-sharing ratio according to the service score. The executing unit 350 is configured to upload the check-out information of the customer and the transaction information to the blockchain when the receiving unit receives the check-out information, such that the blockchain executes the predetermined smart contract to adjust the profit-sharing ratio according to the service score in the check-out information and complete profit sharing according to the adjusted profit-sharing ratio.

In an example, the receiving unit 310 is further configured to receive registration information of the hotelier, registration information of the professional, and registration information of the customer, where the registration information includes a transaction account and at least one identity label. The apparatus for hotel management further includes a verifying unit 360, a creating unit 370, and an uploading unit 380. The verifying unit 360 is configured to verify the registration information of the hotelier, the registration information of the professional, and the registration information of the customer. The creating unit 370 is configured to create the account information of the hotelier, the account information of the professional, and the account information of the customer according to the registration information of the hotelier, the registration information of the professional, and the registration information of the customer. The uploading unit 380 is configured to upload to the blockchain the registration information of the hotelier, the registration information of the professional, the registration information of the customer, the account information of the customer, the account information of the professional, and the account information of the hotelier.

In an example, the sending unit 320 is configured to push an instruction for business qualification certification to the hotelier. The receiving unit 310 is further configured to receive business qualification certification information of the hotelier, where the business qualification certification information indicates that the hotelier is qualified. The apparatus for hotel management further includes an adding unit 390. The adding unit 390 is configured to add the business qualification certification information to the registration information of the hotelier.

In another example, the sending unit 320 is configured to push an instruction for service qualification certification to the professional. The receiving unit 310 is configured to receive service qualification certification information of the professional, where the service qualification certification information indicates that the professional is qualified. The apparatus for hotel management further includes an adding unit 390. The adding unit 390 is configured to add the service qualification certification information to the registration information of the professional.

In another example, the sending unit 320 is configured to push to the customer an instruction for setting preferences. The receiving unit 310 is configured to receive preference information of the customer, where the preference information is indicative of customer preferences. The apparatus for hotel management further includes an adding unit 390. The adding unit 390 is configured to add the preference information to the registration information of the customer.

According to implementations provided herein, when the receiving unit receives the order request of the customer for the hotel, the sending unit pushes the demand information in the order request to the professional. When the receiving unit receives the order-taking information which indicates that the professional has taken the order, the generating unit generates the transaction information according to the order request and the order-taking information. When the receiving unit receives the check-out information of the customer, the executing unit uploads the transaction information to the blockchain to trigger execution of the smart contract in the blockchain, to deduct from an account of the customer an amount indicated by the transaction amount and transfer the deducted amount to an account of the professional and an account of the hotelier respectively according to the profit-sharing ratio between the professional and the hotelier. Implementations provide an efficient method for hotel management. If the method is adopted, for the customer, the professional, and the hotelier, self-service order placement, self-service order taking, and transaction can be quickly achieved through the Internet. On the other hand, the professional is also treated as a hotel partner to cooperate with the hotelier for hotel management, which is possible to fully motivate the professional to work with high enthusiasm. Therefore, efficiency in hotel management can be greatly improved while reducing labor cost and operating cost of the hotel. In addition, according to implementations provided herein, execution of the smart contract and non-tamperability of information in the blockchain are ensured with the blockchain, thereby ensuring openness and transparency of transaction and ensuring rights and interests of the customer, the professional, and the hotelier. Therefore, efficiency in hotel management can be further improved with aid of the blockchain.

FIG. 4 is a schematic structural diagram of a blockchain node server according to implementations. As illustrated in FIG. 4, the blockchain node server includes a processor 410 and a memory 420. The processor 410 is coupled with the memory 420 via a bus 430.

The processor 410 is configured to execute functions of the generating unit 330 to generate transaction information according to an order request for a hotel and order-taking information which indicates that a professional has taken the order, where the transaction information includes a transaction amount, account information of a customer, account information of the professional, and account information of a hotelier. The processor 410 is further configured to execute functions of the checking-in unit 340 to verify verification information of the customer when the customer checks in at the hotel, and allow the customer to check in after successful verification. The processor 410 is further configured to execute functions of the executing unit 350 to upload the transaction information to a blockchain upon receiving check-out information of the customer, such that the blockchain executes a predetermined smart contract to complete profit sharing, where the smart contract is indicative of a profit-sharing ratio between the professional and the hotelier.

According to the relevant laws and regulations, when the customer checks in at the hotel, a second confirmation of customer information and registration for check-in are required. According to implementations, information verification and registration for check-in are both performed with an unmanned reception desk when the customer checks in at the hotel, and verification of information data and registration are achieved through the blockchain node server. The processor 410 is configured to operate as follows. The processor 410 is configured to receive identity verification information of the customer and the transaction information. The processor 410 is configured to perform check-in verification according to the identity verification information and the transaction information. The processor 410 is configured to generate check-in information according to the identity verification information and the transaction information after successful verification and upload the check-in information to the blockchain.

The blockchain node server further includes a communication interface 440. The communication interface 440 is configured to execute functions of the receiving unit 310 to receive the order request of the customer. The communication interface 440 is further configured to execute functions of the sending unit 320 to push demand information in the order request to the professional, where the demand information is indicative of a demand of the customer. The communication interface 440 is further configured to receive the order-taking information.

In an example, the transaction information further includes a room type selected by the customer, and the smart contract is indicative of a profit-sharing ratio between the professional and the hotelier corresponding to the room type selected by the customer. The processor 410 is configured to upload the transaction information to the blockchain upon receiving the check-out information of the customer, such that the blockchain executes the predetermined smart contract to obtain the profit-sharing ratio corresponding to the room type in the transaction information and complete profit sharing according to the profit-sharing ratio corresponding to the room type.

In another example, the check-out information further includes a service score, and the smart contract is indicative of the profit-sharing ratio between the professional and the hotelier and an adjustment rule for adjusting the profit-sharing ratio according to the service score. The processor is configured to upload the check-out information of the customer and the transaction information to the blockchain upon receiving the check-out information, such that the blockchain executes the predetermined smart contract to adjust the profit-sharing ratio according to the service score in the check-out information and complete profit sharing according to the adjusted profit-sharing ratio.

In an example, the communication interface 440 is further configured to receive registration information of the hotelier, registration information of the professional, and registration information of the customer, where the registration information includes a transaction account and at least one identity label. The processor is further configured to execute functions of the verifying unit 360 to verify the registration information of the hotelier, the registration information of the professional, and the registration information of the customer. The processor 410 is further configured to execute functions of the creating unit 370 to create the account information of the hotelier, the account information of the professional, and the account information of the customer according to the registration information of the hotelier, the registration information of the professional, and the registration information of the customer. The communication interface 440 is further configured to execute functions of the uploading unit 380 to upload to the blockchain the registration information of the hotelier, the registration information of the professional, the registration information of the customer, the account information of the customer, the account information of the professional, and the account information of the hotelier.

In an example, the communication interface 440 is further configured to push an instruction for business qualification certification to the hotelier. The communication interface 440 is further configured to receive business qualification certification information of the hotelier, where the business qualification certification information indicates that the hotelier is qualified. The processor 410 is further configured to execute functions of the adding unit 390 to add the business qualification certification information to the registration information of the hotelier.

In another example, the communication interface 440 is further configured to push an instruction for service qualification certification to the professional. The communication interface 440 is further configured to receive service qualification certification information of the professional, where the service qualification certification information indicates that the professional is qualified. The processor 410 is further configured to execute functions of the adding unit 390 to add the service qualification certification information to the registration information of the professional.

In another example, the communication interface 440 is further configured to push to the customer an instruction for setting preferences. The communication interface 440 is further configured to receive preference information of the customer, where the preference information is indicative of customer preferences. The processor 410 is further configured to execute functions of the adding unit 390 to add the preference information to the registration information of the customer.

According to implementations, the processor 410 may be a central processing unit (CPU). The processor 410 may also be other general-purpose processors, a digital signal processor (DSP), an application specific integrated circuit (ASIC), a field programmable gate array (FPGA), or other programmable logic devices, discrete gates or transistor logic devices, discrete hardware components, etc. The general purpose processor may be a microprocessor, or the processor may be any conventional processor or the like.

The memory 420 may include a read-only memory (ROM) and a random-access memory (RAM) and can provide instructions and data to the processor 410. Part of the memory 420 may further include a non-volatile RAM. For example, the memory 420 may store information on device type.

A computer-readable storage medium may be an internal storage unit of the apparatus for hotel management of any of the foregoing implementations, such as a hard disk or a memory of the apparatus for hotel management. The computer-readable storage medium may also be an external storage device of the apparatus for hotel management, such as a plug-in hard disk, a smart media card (SMC), a secure digital (SD) card, a flash card, and the like that are provided on the apparatus for hotel management. In addition, the computer-readable storage medium may also include both the internal storage unit of the apparatus for hotel management and the external storage device of the apparatus for hotel management. The computer-readable storage medium is configured to store computer programs and other programs and data required by the apparatus for hotel management. The computer-readable storage medium can be further configured to temporarily store data that has been or is to be outputted.

The processor 410 according to implementations may implement the method for hotel management described in a second implementation and a third implementations, or implement the apparatus for hotel management described in implementations, which will not be repeated herein.

Those of ordinary skill in the art will appreciate that units and algorithmic operations of various examples described in connection with implementations herein can be implemented by electronic hardware, by computer software, or by a combination of computer software and electronic hardware. In order to clearly explain interchangeability of hardware and software, in the above description, configurations and operations of each example have been generally described according to functions. Whether these functions are performed by means of hardware or software depends on the application and the design constraints of the associated technical solution. Those skilled in the art may use different methods for hotel management with regard to each particular application to implement the described functionality, but such methods should not be regarded as lying beyond the scope of the invention as defined by the appended claims.

It will be evident to those skilled in the art that, for the sake of convenience and simplicity, in terms of the working processes of the apparatus for hotel management and units thereof, reference can be made to the corresponding processes of the foregoing implementations of the method for hotel management, which will not be repeated herein.

It will be appreciated that the apparatus and method for hotel management disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, mechanical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

Various functional units described in implementations herein may be integrated into one processing unit or may be present as a number of physically separated units, and two or more units may be integrated into one. The integrated unit may take the form of hardware or a software functional unit.

If the integrated units are implemented as software functional units and sold or used as standalone products, they may be stored in a computer readable storage medium. Based on such an understanding, the essential technical solution, or the portion that contributes to the prior art, or all or part of the technical solution of the disclosure may be embodied as software products. The computer software products can be stored in a storage medium and may include multiple instructions that, when executed, can cause a computing device, e.g., a personal computer, the apparatus for hotel management, a network device, etc. to execute some or all operations of the methods described in various implementations. The above storage medium may include various kinds of media that can store program codes, such as a universal serial bus (USB) flash disk, a mobile hard drive, a ROM, a RAM, a magnetic disk, or an optical disk.

## Claims

1. A method for hotel management based on blockchain technology, applicable to a blockchain node server and comprising:
receiving (101), by the blockchain node server, an order request of a customer for a hotel;
pushing (102), by the blockchain node server, demand information in the order request to a professional, wherein the demand information is indicative of a demand of the customer;
receiving (103), by the blockchain node server, order-taking information which indicates that the professional has taken order of the order request;
generating (104), by the blockchain node server, transaction information according to the order request and the order-taking information, wherein the transaction information comprises a transaction amount, account information of the customer, account information of the professional, and account information of a hotelier;
verifying (105), by the blockchain node server, verification information of the customer when the customer checks in at the hotel, and allowing, by the blockchain node server, the customer to check in after successful verification; and
uploading (106), by the blockchain node server, both the transaction information and check-out information of the customer to a blockchain upon receiving the check-out information of the customer, to trigger execution of a predetermined smart contract in the blockchain, such that the blockchain executes the predetermined smart contract to complete profit sharing according to the check-out information, wherein the smart contract is indicative of a profit-sharing ratio between the professional and the hotelier.

2. The method of claim 1, wherein verifying the verification information of the customer when the customer checks in at the hotel, and allowing the customer to check in after successful verification comprises:
receiving identity verification information of the customer and the transaction information;
performing check-in verification according to the identity verification information and the transaction information; and
generating check-in information according to the identity verification information and the transaction information after successful verification, and uploading the check-in information to the blockchain.

3. The method of claim 1, wherein the transaction information further comprises a room type selected by the customer, and the smart contract is indicative of a profit-sharing ratio between the professional and the hotelier corresponding to the room type selected by the customer;
uploading the transaction information to the blockchain upon receiving the check-out information of the customer, such that the blockchain executes the predetermined smart contract to complete profit sharing comprises:
uploading the transaction information to the blockchain upon receiving the check-out information of the customer, such that the blockchain executes the predetermined smart contract to obtain the profit-sharing ratio corresponding to the room type in the transaction information and complete profit sharing according to the profit-sharing ratio corresponding to the room type.

4. The method of claim 1, wherein the check-out information further comprises a service score, and the smart contract is indicative of the profit-sharing ratio between the professional and the hotelier and an adjustment rule for adjusting the profit-sharing ratio according to the service score;
uploading the transaction information to the blockchain upon receiving the check-out information of the customer, such that the blockchain executes the predetermined smart contract to complete profit sharing comprises:
uploading the check-out information of the customer and the transaction information to the blockchain upon receiving the check-out information, such that the blockchain executes the predetermined smart contract to adjust the profit-sharing ratio according to the service score in the check-out information and complete profit sharing according to the adjusted profit-sharing ratio.

5. The method of claim 1, further comprising:
before receiving the order request of the customer for the hotel,
receiving (201) registration information of the hotelier, registration information of the professional, and registration information of the customer, wherein the registration information comprises a transaction account and at least one identity label;
verifying (202) the registration information of the hotelier, the registration information of the professional, and the registration information of the customer, and after successful verification, creating (203) the account information of the hotelier, the account information of the professional, and the account information of the customer according to the registration information of the hotelier, the registration information of the professional, and the registration information of the customer; and
uploading (204) to the blockchain the registration information of the hotelier, the registration information of the professional, the registration information of the customer, the account information of the customer, the account information of the professional, and the account information of the hotelier.

6. The method of claim 5, wherein upon receiving the registration information of the hotelier, the method further comprises:
before verifying the registration information of the hotelier,
pushing an instruction for business qualification certification to the hotelier; receiving business qualification certification information of the hotelier, wherein the business qualification certification information indicates that the hotelier is qualified; and
adding the business qualification certification information to the registration information of the hotelier.

7. The method of claim 5, wherein upon receiving the registration information of the professional, the method further comprises:
before verifying the registration information of the professional,
pushing an instruction for service qualification certification to the professional;
receiving service qualification certification information of the professional, wherein the service qualification certification information indicates that the professional is qualified; and
adding the service qualification certification information to the registration information of the professional.

8. The method of claim 5, wherein upon receiving the registration information of the customer, the method further comprises:
before verifying the registration information of the customer,
pushing to the customer an instruction for setting preferences;
receiving preference information of the customer, wherein the preference information is indicative of customer preferences; and
adding the preference information to the registration information of the customer.

9. An apparatus for hotel management, applicable to a blockchain node server to perform the method of any of claims 1-8 and comprising:
a receiving unit (310) configured to receive an order request of a customer for a hotel;
a sending unit (320) configured to push demand information in the order request to a professional, wherein the demand information is indicative of a demand of the customer;
the receiving unit being further configured to receive order-taking information which indicates that the professional has taken the order of the order request
a generating unit (330) configured to generate transaction information according to the order request and the order-taking information, wherein the transaction information comprises a transaction amount, account information of the customer, account information of the professional, and account information of a hotelier;
a checking-in unit (340) configured to verify verification information of the customer when the customer checks in at the hotel, and allow the customer to check in after successful verification; and
an executing unit (350) configured to upload the transaction information to a blockchain when the receiving unit receives check-out information of the customer, to trigger execution of a predetermined smart contract in the block chain, such that the blockchain executes a predetermined smart contract to complete profit sharing according to the check-out information, wherein the smart contract is indicative of a profit-sharing ratio between the professional and the hotelier.

10. A blockchain node server, comprising:
a memory (420) configured to store computer programs, the computer programs comprising program instructions; and
a processor (410) coupled with the memory and configured to invoke the program instructions to perform the method of any of claims 1 to 8.

## Patentansprüche

1. Verfahren zur Hotelverwaltung basierend auf der Blockchain-Technologie, das auf einen Blockchain-Knotenserver anwendbar ist und Folgendes umfasst:
Empfangen (101), durch den Blockchain-Knotenserver, einer Bestellanforderung eines Kunden für ein Hotel;
Senden (102), durch den Blockchain-Knotenserver, von Bedarfsinformationen in der Bestellanforderung an eine Fachkraft, wobei die Bedarfsinformationen auf einen Bedarf des Kunden hinweisen;
Empfangen (103), durch den Blockchain-Knotenserver, von Bestellungsannahmeinformationen, die anzeigen, dass die Fachkraft die Bestellung der Bestellungsanforderung angenommen hat;
Erzeugen (104), durch den Blockchain-Knotenserver, von Transaktionsinformationen gemäß der Bestellanforderung und den Bestellungsannahmeinformationen, wobei die Transaktionsinformationen einen Transaktionsbetrag, Kontoinformationen des Kunden, Kontoinformationen der Fachkraft und Kontoinformationen eines Hoteliers umfassen;
Verifizieren (105), durch den Blockchain-Knotenserver, von Verifizierungsinformationen des Kunden, wenn der Kunde im Hotel eincheckt, und Erlauben, durch den Blockchain-Knotenserver, dass der Kunde nach erfolgreicher Verifizierung eincheckt; und
Hochladen (106), durch den Blockchain-Knotenserver, sowohl der Transaktionsinformationen als auch der Auscheck-Informationen des Kunden zu einer Blockchain nach dem Empfang der Auscheck-Informationen des Kunden, um die Ausführung eines vorbestimmten intelligenten Vertrags in der Blockchain auszulösen, so dass die Blockchain den vorbestimmten intelligenten Vertrag ausführt, um die Gewinnbeteiligung gemäß der Auscheck-Informationen zu vervollständigen, wobei der intelligente Vertrag ein Gewinnbeteiligungsverhältnis zwischen der Fachkraft und dem Hotelier angibt.

2. Verfahren nach Anspruch 1, wobei das Verifizieren der Verifizierungsinformationen des Kunden, wenn der Kunde im Hotel eincheckt, und das Erlauben des Kunden, nach erfolgreicher Verifizierung einzuchecken, Folgendes umfasst:
Empfangen der Identitätsverifizierungsinformationen des Kunden und der Transaktionsinformation;
Durchführen einer Eincheck-Verifizierung gemäß der Identitätsverifizierungsinformationen und der Transaktionsinformation; und
Erzeugen von Eincheck-Informationen gemäß den Identitätsverifizierungsinformationen und den Transaktionsinformationen nach erfolgreicher Verifizierung und Hochladen der Eincheck-Informationen auf die Blockchain.

3. Verfahren nach Anspruch 1, wobei die Transaktionsinformationen ferner einen vom Kunden ausgewählten Zimmertyp umfasst, und der intelligente Vertrag ein Gewinnbeteiligungsverhältnis zwischen der Fachkraft und dem Hotelier angibt, das dem vom Kunden ausgewählten Zimmertyp entspricht;
Hochladen der Transaktionsinformationen auf die Blockchain nach dem Empfangen der Auscheck-Informationen des Kunden, so dass die Blockchain den vorbestimmten intelligenten Vertrag ausführt, um die Gewinnaufteilung abzuschließen, umfassend:
Hochladen der Transaktionsinformationen auf die Blockchain nach dem Empfang der Auscheck-Informationen des Kunden, so dass die Blockchain den vorbestimmten intelligenten Vertrag ausführt, um das dem Zimmertyp entsprechende Gewinnbeteiligungsverhältnis in den Transaktionsinformationen zu erhalten und die Gewinnbeteiligung gemäß dem dem Zimmertyp entsprechenden Gewinnbeteiligungsverhältnis abzuschließen.

4. Verfahren nach Anspruch 1, wobei die Auscheck-Informationen ferner einen Service-Score umfassen und der intelligente Vertrag das Gewinnbeteiligungsverhältnis zwischen der Fachkraft und dem Hotelier und eine Anpassungsregel zum Anpassen des Gewinnbeteiligungsverhältnisses gemäß dem Service-Score angibt;
Hochladen der Transaktionsinformationen auf die Blockchain nach dem Empfangen der Auscheck-Informationen des Kunden, so dass die Blockchain den vorbestimmten intelligenten Vertrag ausführt, um die Gewinnaufteilung abzuschließen, umfassend:
Hochladen der Auscheck-Informationen des Kunden und der Transaktionsinformationen auf die Blockchain nach dem Empfang der Auscheck-Informationen, so dass die Blockchain den vorbestimmten intelligenten Vertrag ausführt, um das Gewinnbeteiligungsverhältnis entsprechend der Dienstbewertung in den Auscheck-Informationen anzupassen und die Gewinnbeteiligung entsprechend dem angepassten Gewinnbeteiligungsverhältnis abzuschließen.

5. Verfahren nach Anspruch 1, das ferner Folgendes umfasst:
vor dem Empfang der Bestellanforderung des Kunden für das Hotel,
Empfangen (201) von Registrierungsinformationen des Hoteliers, Registrierungsinformationen der Fachkraft und Registrierungsinformationen des Kunden, wobei die Registrierungsinformationen ein Transaktionskonto und mindestens ein Identitätskennzeichen umfassen;
Verifizieren (202) der Registrierungsinformationen des Hoteliers, der Registrierungsinformationen der Fachkraft und der Registrierungsinformationen des Kunden, und nach erfolgreicher Verifizierung, Erstellen (203) der Kontoinformationen des Hoteliers, der Kontoinformationen der Fachkraft und der Kontoinformationen des Kunden gemäß den Registrierungsinformationen des Hoteliers, den Registrierungsinformationen der Fachkraft und den Registrierungsinformationen des Kunden; und
Hochladen (204) der Registrierungsinformationen des Hoteliers, der Registrierungsinformationen der Fachkraft, der Registrierungsinformationen des Kunden, der Kontoinformationen des Kunden, der Kontoinformationen der Fachkraft und der Kontoinformationen des Hoteliers auf die Blockchain.

6. Verfahren nach Anspruch 5, wobei nach dem Empfang der Registrierungsinformationen des Hoteliers das Verfahren ferner umfasst:
vor der Verifizierung der Registrierungsinformationen des Hoteliers,
Senden einer Anweisung zur Zertifizierung der geschäftlichen Qualifikation an den Hotelier;
Empfangen von Informationen zur Zertifizierung der geschäftlichen Qualifikation des Hoteliers, wobei die Informationen über die Zertifizierung der geschäftlichen Qualifikation anzeigt, dass der Hotelier qualifiziert ist; und
Hinzufügen der Geschäftsqualifikationszertifizierungsinformationen zu den Registrierungsinformationen des Hoteliers.

7. Verfahren nach Anspruch 5, wobei nach dem Empfang der Registrierungsinformationen des Hoteliers das Verfahren ferner Folgendes umfasst:
vor der Verifizierung der Registrierungsinformationen des Hoteliers,
Senden einer Anweisung zur Zertifizierung der Dienstqualifikation an die Fachkraft;
Empfangen von Informationen über die Zertifizierung der Dienstqualifikation der Fachkraft, wobei die Informationen über die Zertifizierung der Dienstqualifikation anzeigen, dass die Fachkraft qualifiziert ist; und
Hinzufügen der Dienstqualifikationszertifizierungsinformationen zu den Registrierungsinformationen der Fachkraft.

8. Verfahren nach Anspruch 5, wobei nach dem Empfang der Registrierungsinformationen des Kunden das Verfahren ferner Folgendes umfasst:
vor der Verifizierung der Registrierungsinformationen des Kunden,
Senden einer Anweisung zum Einstellen von Präferenzen an den Kunden;
Empfangen von Präferenzinformationen des Kunden, wobei die Präferenzinformationen auf Kundenpräferenzen hinweisen; und
Hinzufügen der Präferenzinformationen zu den Registrierungsinformationen des Kunden.

9. Vorrichtung für die Hotelverwaltung, die auf einen Blockchain-Knotenserver anwendbar ist, um das Verfahren nach einem der Ansprüche 1-8 durchzuführen, und die Folgendes umfasst:
eine Empfangseinheit (310), die dafür konfiguriert ist, eine Bestellanforderung eines Kunden für ein Hotel zu empfangen;
eine Sendeeinheit (320), die dafür konfiguriert ist, Bedarfsinformationen in der Bestellanforderung an eine Fachkraft zu senden, wobei die Bedarfsinformationen auf einen Bedarf des Kunden hinweisen;
wobei die Empfangseinheit ferner dafür konfiguriert ist, Bestellungsannahmeinformationen zu empfangen, die anzeigen, dass die Fachkraft den Auftrag der Bestellanforderung angenommen hat,
eine Erzeugungseinheit (330), die dafür konfiguriert ist, Transaktionsinformationen gemäß der Bestellanforderung und den Bestellungsannahmeinformationen zu erzeugen, wobei die Transaktionsinformationen einen Transaktionsbetrag, Kontoinformationen des Kunden, Kontoinformationen der Fachkraft und Kontoinformationen eines Hoteliers umfassen;
eine Eincheck-Einheit (340), die dafür konfiguriert ist, Verifizierungsinformationen des Kunden zu verifizieren, wenn der Kunde im Hotel eincheckt, und dem Kunden nach erfolgreicher Verifizierung erlaubt, einzuchecken; und
eine Ausführungseinheit (350), die dafür konfiguriert ist, die Transaktionsinformationen in eine Blockchain hochzuladen, wenn die Empfangseinheit Auscheck-Informationen des Kunden empfängt, um die Ausführung eines vorbestimmten intelligenten Vertrags in der Blockchain auszulösen, so dass die Blockchain den vorbestimmten intelligenten Vertrag ausführt, um die Gewinnbeteiligung gemäß der Auscheck-Informationen zu vervollständigen, wobei der intelligente Vertrag ein Gewinnbeteiligungsverhältnis zwischen der Fachkraft und dem Hotelier angibt.

10. Blockchain-Knotenserver, der Folgendes umfasst:
einen Speicher (420), der zum Speichern von Computerprogrammen konfiguriert ist, wobei die Computerprogramme Programmanweisungen umfassen; und
einen Prozessor (410), der mit dem Speicher gekoppelt und dafür konfiguriert ist, die Programmanweisungen aufzurufen, um das Verfahren nach einem der Ansprüche 1 bis 8 durchzuführen.

## Revendications

1. Procédé de gestion d'hôtel basé sur la technologie de chaîne de blocs, applicable à un serveur de nœud de chaîne de blocs et consistant à :
recevoir (101), par le serveur de nœud de chaîne de blocs, une demande de commande d'un client pour un hôtel ;
transmettre (102) à un professionnel, par le serveur de nœud de chaîne de blocs, des informations de demande dans la demande de commande, les informations de demande indiquant une demande du client ;
recevoir (103), par le serveur de nœud de chaîne de blocs, des informations de prise de commande qui indiquent que le professionnel a pris commande de la demande de commande ;
générer (104), par le serveur de nœud de chaîne de blocs, des informations de transaction selon la demande de commande et les informations de prise de commande, les informations de transaction comprenant un montant de transaction, des informations de compte du client, des informations de compte du professionnel et des informations de compte d'un hôtelier ;
vérifier (105), par le serveur de nœud de chaîne de blocs, les informations de vérification du client lorsque le client s'enregistre à l'hôtel et autoriser, par le serveur de nœud de chaîne de blocs, le client à s'enregistrer après une vérification réussie ; et
télécharger (106), par le serveur de nœud de chaîne de blocs, à la fois les informations de transaction et des informations de départ du client vers l'amont sur une chaîne de blocs lors de la réception des informations de départ du client, pour déclencher l'exécution d'un contrat intelligent prédéterminé dans la chaîne de blocs, de telle sorte que la chaîne de blocs exécute le contrat intelligent prédéterminé pour achever un partage de recettes selon les informations de départ, le contrat intelligent indiquant un rapport de partage de recettes entre le professionnel et l'hôtelier.

2. Procédé selon la revendication **1,** la vérification des informations de vérification du client lorsque le client s'enregistre à l'hôtel et l'autorisation du client à s'enregistrer après une vérification réussie consistant à :
recevoir des informations de vérification d'identité du client et les informations de transaction ;
réaliser une vérification d'enregistrement selon les informations de vérification d'identité et les informations de transaction ; et
générer des informations d'enregistrement selon les informations de vérification d'identité et les informations de transaction après une vérification réussie, et télécharger les informations d'enregistrement vers l'amont sur la chaîne de blocs.

3. Procédé selon la revendication 1, les informations de transaction comprenant en outre un type de chambre sélectionné par le client, et le contrat intelligent indiquant un rapport de partage de recettes entre le professionnel et l'hôtelier correspondant au type de chambre sélectionné par le client ;
le téléchargement des informations de transaction vers l'amont sur la chaîne de blocs lors de la réception des informations de départ du client, de telle sorte que la chaîne de blocs exécute le contrat intelligent prédéterminé pour achever le partage de recettes, consistant à :
télécharger les informations de transaction vers l'amont sur la chaîne de blocs lors de la réception des informations de départ du client, de telle sorte que la chaîne de blocs exécute le contrat intelligent prédéterminé pour obtenir le rapport de partage de recettes correspondant au type de chambre dans les informations de transaction et achever le partage de recettes selon le rapport de partage de recettes correspondant au type de chambre.

4. Procédé selon la revendication 1, les informations de départ comprenant en outre un score de service, et le contrat intelligent indiquant le rapport de partage de recettes entre le professionnel et l'hôtelier et une règle d'ajustement pour ajuster le rapport de partage de recettes selon le score de service ;
le téléchargement des informations de transaction vers l'amont sur la chaîne de blocs lors de la réception des informations de départ du client, de telle sorte que la chaîne de blocs exécute le contrat intelligent prédéterminé pour achever le partage de recettes, consistant à :
télécharger les informations de départ du client et les informations de transaction vers l'amont sur la chaîne de blocs lors de la réception des informations de départ, de telle sorte que la chaîne de blocs exécute le contrat intelligent prédéterminé pour ajuster le rapport de partage de recettes selon le score de service dans les informations de départ et achève le partage de recettes selon le rapport de partage de recettes ajusté.

5. Procédé selon la revendication 1, consistant en outre à :
avant la réception de la demande de commande du client pour l'hôtel,
recevoir (201) des informations d'inscription de l'hôtelier, des informations d'inscription du professionnel et des informations d'inscription du client, les informations d'inscription comprenant un compte de transaction et au moins une étiquette d'identité ;
vérifier (202) les informations d'inscription de l'hôtelier, les informations d'inscription du professionnel et les informations d'inscription du client et, après une vérification réussie, créer (203) les informations de compte de l'hôtelier, les informations de compte du professionnel et les informations de compte du client selon les informations d'inscription de l'hôtelier, les informations d'inscription du professionnel et les informations d'inscription du client ; et
télécharger (204) vers l'amont sur la chaîne de blocs les informations d'inscription de l'hôtelier, les informations d'inscription du professionnel, les informations d'inscription du client, les informations de compte du client, les informations de compte du professionnel et les informations de compte de l'hôtelier.

6. Procédé selon la revendication 5, le procédé consistant en outre, lors de la réception des informations d'inscription de l'hôtelier, à :
avant la vérification des informations d'inscription de l'hôtelier,
transmettre à l'hôtelier une instruction de certification de qualification d'entreprise ;
recevoir des informations de certification de qualification d'entreprise de l'hôtelier, les informations de certification de qualification d'entreprise indiquant que l'hôtelier est qualifié ; et
ajouter les informations de certification de qualification d'entreprise aux informations d'inscription de l'hôtelier.

7. Procédé selon la revendication 5, le procédé consistant en outre, lors de la réception des informations d'inscription du professionnel, à :
avant la vérification des informations d'inscription du professionnel,
transmettre au professionnel une instruction de certification de qualification de service ;
recevoir des informations de certification de qualification de service du professionnel, les informations de certification de qualification de service indiquant que le professionnel est qualifié ; et
ajouter les informations de certification de qualification de service aux informations d'inscription du professionnel.

8. Procédé selon la revendication 5, le procédé consistant en outre, lors de la réception des informations d'inscription du client, à :
avant la vérification des informations d'inscription du client,
transmettre au client une instruction de réglage de préférences ;
recevoir des informations de préférences du client, les informations de préférences indiquant des préférences de client ; et
ajouter les informations de préférences aux informations d'inscription du client.

9. Appareil de gestion d'hôtel, applicable à un serveur de nœud de chaîne de blocs pour réaliser le procédé selon l'une quelconque des revendications 1 à 8, et comprenant :
une unité de réception (310), configurée pour recevoir une demande de commande d'un client pour un hôtel ;
une unité d'envoi (320), configurée pour transmettre à un professionnel des informations de demande dans la demande de commande, les informations de demande indiquant une demande du client ;
l'unité de réception étant en outre configurée pour recevoir des informations de prise de commande qui indiquent que le professionnel a pris la commande de la demande de commande ;
une unité de génération (330), configurée pour générer des informations de transaction selon la demande de commande et les informations de prise de commande, les informations de transaction comprenant un montant de transaction, des informations de compte du client, des informations de compte du professionnel et des informations de compte d'un hôtelier ;
une unité d'enregistrement (340), configurée pour vérifier des informations de vérification du client lorsque le client s'enregistre à l'hôtel et autoriser le client à s'enregistrer après une vérification réussie ; et
une unité d'exécution (350), configurée pour télécharger les informations de transaction vers l'amont sur une chaîne de blocs lorsque l'unité de réception reçoit des informations de départ du client, pour déclencher l'exécution d'un contrat intelligent prédéterminé dans la chaîne de blocs, de telle sorte que la chaîne de blocs exécute un contrat intelligent prédéterminé pour achever un partage de recettes selon les informations de départ, le contrat intelligent indiquant un rapport de partage de recettes entre le professionnel et l'hôtelier.

10. Serveur de nœud de chaîne de blocs, comprenant :
une mémoire (420) configurée pour stocker des programmes informatiques, les programmes informatiques comprenant des instructions de programme ; et
un processeur (410) couplé à la mémoire et configuré pour appeler les instructions de programme pour réaliser le procédé selon l'une quelconque des revendications 1 à 8.
